(19) Europäisches Patentamt / European Patent Office / Office européen des brevets

(11) **EP 3 521 260 A1**

(12) **EUROPEAN PATENT APPLICATION**
published in accordance with Art. 153(4) EPC

(43) Date of publication:
07.08.2019 Bulletin 2019/32

(51) Int Cl.:
*C03C 27/12* (2006.01)     *B60J 1/00* (2006.01)
*C08F 265/06* (2006.01)    *C08F 297/02* (2006.01)
*C08L 33/00* (2006.01)     *C08L 53/00* (2006.01)
*C08L 93/04* (2006.01)     *C08L 101/00* (2006.01)

(21) Application number: 17855816.9

(22) Date of filing: 19.09.2017

(86) International application number:
PCT/JP2017/033699

(87) International publication number:
WO 2018/061861 (05.04.2018 Gazette 2018/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.09.2016  JP 2016188735
27.09.2016  JP 2016188737

(71) Applicant: Kuraray Co., Ltd.
Kurashiki-shi, Okayama 710-0801 (JP)

(72) Inventors:
• ASANUMA, Yoshiaki
Kurashiki-shi
Okayama 713-8550 (JP)
• OSHITA, Tatsuya
Kurashiki-shi
Okayama 713-8550 (JP)
• ISOUE, Koichiro
Kurashiki-shi
Okayama 713-8550 (JP)

(74) Representative: Müller-Boré & Partner
Patentanwälte PartG mbB
Friedenheimer Brücke 21
80639 München (DE)

(54) **INTERMEDIATE FILM FOR LAMINATED GLASS**

(57)     An intermediate film for laminated glasses, the intermediate film having at least a sound insulation layer that comprises a resin composition A containing 100 parts by mass of a thermoplastic resin and 10 to 1000 parts by mass of a damping-property-imparting agent, wherein the damping-property-imparting agent has a molecular weight of 100 to 10000 and does not have a melting point at a temperature higher than 30°C, and the resin composition A has a maximum value of $\tan\delta$ at a temperature of 30°C or lower, and the maximum value is more than 3.1.

EP 3 521 260 A1

**Description**

TECHNICAL FIELD

The present invention relates to an intermediate film for laminated glasses.

BACKGROUND ART

An intermediate film for laminated glasses is a film which is required to have high strength, high transparency, excellent adhesiveness to glasses and excellent flexibility. A laminated glass produced by sandwiching the intermediate film for laminated glasses by two glasses has been used as various safety glasses such as an automotive front glass.

In recent years, the improvement in the quality of life environments has been increasingly demanded, and concomitantly the improvement in the environments against noises and vibrations has been increasingly demanded. For example, in a laminated glass used as a window in an automobile or a building, high sound insulation properties are required. For the purpose of reducing noises, studies have been made on a sound insulating laminated glass which is equipped with a sound insulating intermediate film for laminated glasses composed of a film made from a resin composition having damping properties and glasses having the intermediate film sandwiched therebetween. For example, as a damping resin composition and an intermediate film for laminated glasses which can be used in a laminated glass having sound insulation properties, Patent Document 1 discloses a resin composition containing poly(vinyl acetal) and the ester compound represented by the specific formula, and a laminate having a layer produced from the resin composition. Patent Document 2 discloses a resin composition containing a poly(vinyl acetal) resin, a plasticizer and a tackifier, and an intermediate film for laminated glasses, which has a layer formed from the resin composition. In addition, for the purpose of absorbing vibrations and reducing noises, a material which has damping performance (e.g., vibration absorption performance, noise prevention performance) such as a rubber and an elastomer has been developed. Furthermore, a resin composition having damping performance has been demanded as a material that can be used in electric device components that can be used under environments where the prevention of vibrations is severely required, such as automotive electric device components.

Particularly in electric device components and automotive front glasses which are used in automobiles, demand for the reduction in weight has been increasing for the purpose of improving the gas mileage of automobiles, lowering the center of gravity of automobiles or the like. However, it is known that, when the weight of a front glass is reduced, a sound transmission loss is decreased and sound insulation properties are deteriorated. According to Non-Patent Document 1, a sound transmission loss TL [dB] in a region following a mass law can be determined simply in accordance with equation (1):
[Mathematical equation 1]

$$TL = 18 \log_{10} (m \times f) - 43.5 \qquad (1)$$

wherein m [kg/m$^2$] represents a surface density of a laminated glass and f [Hz] represents a frequency. It is found that, when the surface density of a laminated glass is reduced by 10% or 20%, the sound transmission loss is reduced by about 0.8 dB or 1.7 dB, respectively. Namely, the reduction in weight of a front glass and the sound insulation properties of the front glass have been conventionally in a trade-off relationship with each other, and therefore the achievement of both of these properties has still have tasks to be done.

PRIOR ART DOCUMENTS

PATENT DOCUMENTS

Patent Document 1: WO 2014/188544 A1
Patent Document 2: WO 2013/042771 A1

NON-PATENT DOCUMENT

Non-Patent Document 1: Handbook of Damping Technology (Corona Publishing Co., Ltd., 2008), p. 490, equation (3.60)

## SUMMARY OF THE INVENTION

## PROBLEMS TO BE SOLVED BY THE INVENTION

Many of laminated glasses in which conventionally known intermediate films for sound insulating laminated glasses are used have an effect to prevent the decrease in sound transmission loss which may be caused as the result of a coincidence effect. However, for achieving both of the reduction in weight and the sound insulation properties which are required for automotive front glasses, it is needed to further improve sound insulation properties, particularly improve the sound insulation properties against both of a frequency in a region where a mass law becomes predominant and a frequency of a coincidence region. Furthermore, it is also needed that the handling properties are good during the production or storage of an intermediate film for laminated glasses or during the production of a laminated glass using the intermediate film, it is also needed that a resin composition that serves as a raw material exhibits good handling properties during the production of a film or sheet having damping properties, and it is also needed that a film or sheet exhibits good handling properties during the storage of the film or sheet or during the further processing of the film or sheet.

The object of the present invention is to provide: an intermediate film for laminated glasses, which has high sound insulation properties against a frequency in a region where a mass law particularly becomes predominant and a frequency in a coincidence region particularly at a temperature around room temperature, has excellent handling properties, and does not undergo the deterioration in transparency when used for a long period; and a damping resin composition.

## SOLUTIONS TO THE PROBLEMS

The present inventors have found that the above-mentioned object can be achieved by the intermediate film for laminated glasses and the damping resin composition according to the present invention.

Namely, the present invention includes the following preferred aspects.

[1] An intermediate film for laminated glasses, the intermediate film having at least a sound insulation layer that comprises a resin composition A containing 100 parts by mass of a thermoplastic resin and 10 to 1000 parts by mass of a damping-property-imparting agent, wherein the damping-property-imparting agent has a molecular weight of 100 to 10000 and does not have a melting point at a temperature higher than 30°C, the resin composition A has a maximum value of tanδ at a temperature of 30°C or lower, and the maximum value is more than 3.1.

[2] The intermediate film for laminated glasses according to [1], wherein the thermoplastic resin has two or more tanδ peak temperatures in a temperature range from -100 to 250°C.

[3] An intermediate film for laminated glasses, the intermediate film having at least a sound insulation layer that comprises a resin composition A containing 100 parts by mass of a thermoplastic resin and 10 to 1000 parts by mass of a damping-property-imparting agent, wherein the damping-property-imparting agent has a molecular weight of 100 to 10000, the thermoplastic resin has two or more tanδ peak temperatures in a temperature range from -100 to 250°C, the resin composition A has a maximum value of tanδ at a temperature of 30°C or lower, and the maximum value is more than 3.1.

[4] The intermediate film for laminated glasses according to any one of [1] to [3], wherein the cloud point of a composition consisting of 100 parts by mass of the damping-property-imparting agent and 8 parts by mass of the thermoplastic resin is lower than 150°C.

[5] The intermediate film for laminated glasses according to any one of [1] to [4], wherein the thermoplastic resin is an acrylic resin.

[6] The intermediate film for laminated glasses according to [5], wherein the acrylic resin is an acrylic block copolymer or an acrylic core-shell resin.

[7] The intermediate film for laminated glasses according to [6], wherein the acrylic resin contains a soft segment in an amount of 30% by mass or more based on the whole amount of the acrylic resin.

[8] The intermediate film for laminated glasses according to any one of [1] to [4], wherein the thermoplastic resin is a styrene-based block copolymer.

[9] The intermediate film for laminated glasses according to any one of [1] to [8], wherein the damping-property-imparting agent is a compound having two or more cyclic skeletons.

[10] The intermediate film for laminated glasses according to any one of [1] to [9], wherein the damping-property-imparting agent is rosin or modified rosin.

[11] The intermediate film for laminated glasses according to [10], wherein the modified rosin is a rosin ester.

[12] The intermediate film for laminated glasses according to [11], wherein the rosin ester is an ester compound of at least one compound selected from the group consisting of rosin acid, hydrogenated rosin and disproportionated rosin with an alcohol having a valency of 1 to 4.

[13] The intermediate film for laminated glasses according to [11] or [12], wherein the rosin ester has a $T_g$ of lower than 50°C.

[14] The intermediate film for laminated glasses according to any one of [1] to [13], comprising at least the sound insulation layer and a protective layer laminated on at least one surface of the sound insulation layer.

[15] A damping resin composition comprising 100 parts by mass of a thermoplastic resin and 10 to 1000 parts by mass of a damping-property-imparting agent, wherein the damping-property-imparting agent has a molecular weight of 100 to 10000 and does not have a melting point at a temperature higher than 30°C, the resin composition has a maximum value of $\tan\delta$ at a temperature of 30°C or lower, and the maximum value is more than 3.1.

[16] A damping resin composition comprising 100 parts by mass of a thermoplastic resin and 10 to 1000 parts by mass of a damping-property-imparting agent, wherein the damping-property-imparting agent has a molecular weight of 100 to 10000, the thermoplastic resin has two or more $\tan\delta$ peak temperatures in a temperature range from -100 to 250°C, the resin composition has a maximum value of $\tan\delta$ at a temperature of 100°C or lower, and the maximum value is more than 3.1.

EFFECTS OF THE INVENTION

Each of the intermediate film for laminated glasses and the damping resin composition according to the present invention has high sound insulation properties and excellent handling properties, and is not imparted with respect to transparency when used for a long period.

MODE FOR CARRYING OUT THE INVENTION

Hereinbelow, the embodiments of the present invention will be described in detail. The scope of the present invention is not limited to embodiments mentioned in this section, and various modifications may be made without departing from the scope of the spirit of the invention.

The intermediate film for laminated glasses according to the present invention has at least a sound insulation layer formed from a resin composition A comprising a thermoplastic resin and a damping-property-imparting agent, wherein the resin composition A has a maximum value of $\tan\delta$ at a temperature of 30°C or lower and the maximum value is more than 3.1. The intermediate film for laminated glasses according to the present invention, which has a sound insulation layer formed from the resin composition A, particularly has high sound insulation properties against both of a frequency in a region where a mass law becomes predominant and a frequency in a coincidence region and has excellent handling properties. The term "a frequency in a region where a mass law becomes predominant" refers to a frequency in a region where such a mass law that a transmission loss is represented by a given relational equation from the mass of the laminated glass and the frequency of a sound is established. The term "a frequency in a coincidence region" refers to a frequency in a region having a higher frequency than a coincidence cut-off frequency in which a coincidence effect occurs.

In the intermediate film for laminated glasses according to the present invention, the resin composition A has a maximum value of $\tan\delta$ at a temperature of 30°C or lower. If the resin composition A does not have a maximum value of $\tan\delta$ at a temperature of 30°C or lower, the intermediate film for laminated glasses according to the present invention which comprises the sound insulation layer formed from the resin composition A cannot achieve satisfactory sound insulation properties at a temperature around room temperature. The resin composition A may have one maximum value of $\tan\delta$ or two or more maximum values of $\tan\delta$ at a temperature of 30°C or lower. From the viewpoint of improving the sound insulation properties of the intermediate film for laminated glasses at a temperature around room temperature, the resin composition A preferably has a maximum value of $\tan\delta$ at a temperature of 20°C or lower, more preferably 15°C or lower, still more preferably 10°C or lower, further preferably 0°C or lower. The lower limit of the temperature at which the resin composition A has a maximum value of $\tan\delta$ is not particularly limited, and the resin composition A preferably has a maximum value of $\tan\delta$ at a temperature of -50°C or higher, more preferably -20°C or higher, still more preferably -15°C or higher, further preferably -10°C or higher. The maximum value of $\tan\delta$ which the resin composition A has at a temperature of 30°C or lower is more than 3.1. When the resin composition A has one maximum value of $\tan\delta$ at a temperature of 30°C or lower, it is only required that the maximum value is more than 3.1. When the resin composition A has two or more maximum values of $\tan\delta$ at a temperature of 30°C or lower, it is only required that at least one of the two or more maximum values is more than 3.1. If the maximum value is 3.1 or less, the intermediate film for laminated glasses which comprises the sound insulation layer formed from the resin composition A cannot achieve satisfactory sound insulation properties. From the viewpoint of improving the sound insulation properties of the intermediate film for laminated glasses more easily, the maximum value of $\tan\delta$ which the resin composition A has at a temperature of 30°C or lower is preferably 3.2 or more, more preferably 3.4 or more, still more preferably 3.6 or more, further preferably 4.0 or more, particularly preferably 4.5 or more, most preferably 5.0 or more. The upper limit of the maximum value is not particularly limited and is, for example, 20 or less, preferably 15 or less, more preferably 10 or less.

The tan$\delta$ of the resin composition A is a loss tangent measured at a frequency of 0.3 Hz using a dynamic viscoelasticity device, and is a ratio of a loss elastic modulus to a storage modulus (i.e., (loss elastic modulus)/(storage modulus)). For example, tan$\delta$ can be measured using a dynamic viscoelasticity device (e.g., Rheogel-E4000 manufactured by UBM Co., Ltd.) at a frequency of 0.3 Hz in a tensile mode. As a measurement sample, a sheet of the resin composition A which has a thickness of, for example, 0.8 mm may be used. As the measurement sample, a product produced by molding the resin composition A into a sheet-like form by heat pressing or the like may be used, or a product produced by removing a sound insulation layer formed from the resin composition A from an intermediate film for laminated glasses which comprises the sound insulation layer may be used. Examples of the method for adjusting such that the resin composition A can have a maximum value of tan$\delta$ in the above-mentioned temperature range and also adjusting such that the maximum value can fall within the above-mentioned ranges include a method in which a thermoplastic resin and a damping-property-imparting agent as mentioned below are contained in specified amounts in the resin composition A; and a method in which the glass transition temperature ($T_g$) of the thermoplastic resin contained in the resin composition A is adjusted properly.

The intermediate film for laminated glasses according to the present invention has at least a sound insulation layer formed from a resin composition A comprising 100 parts by mass of a thermoplastic resin and 10 to 1000 parts by mass of a damping-property-imparting agent. Examples of the thermoplastic resin include, but are not limited to, an acrylic resin, a styrene-based resin, a poly(vinyl alcohol) resin, a poly(vinyl acetal) resin, a polyurethane resin, a poly(vinyl carboxylate) resin, an olefin-(vinyl carboxylate) copolymer, a polyester elastomer resin and a halogenated polyolefin resin. The resin composition A may comprise a single thermoplastic resin, or may comprise a combination of two or more thermoplastic resins. From the viewpoint of achieving higher sound insulation performance, the thermoplastic resin is preferably an acrylic resin or a styrene-based resin.

The acrylic resin is a polymer which contains a constituent unit derived from at least one (meth)acrylic monomer selected from the group consisting of (meth)acrylic acid and a derivative thereof. The term "(meth)acrylic" as used herein refers to acrylic, methacrylic or both of acrylic and methacrylic. Examples of the acrylic resin include: a homopolymer of a (meth)acrylic monomer such as (meth)acrylic acid, a (meth)acrylic acid ester, (meth)acrylamide, (meth)acrylonitrile or the like, or a copolymer of two or more of these monomers; and a copolymer which contains a (meth)acrylic monomer as the main component and is produced by polymerizing the (meth)acrylic monomer with a monomer copolymerizable with the (meth)acrylic monomer such as styrene and divinylbenzene. The acrylic resin can be produced by polymerizing the (meth)acrylic monomer and/or another monomer copolymerizable with the (meth)acrylic monomer by a conventional known method.

Examples of the (meth)acrylic acid ester include a conventionally known (meth)acrylic acid ester such as an alkyl (meth)acrylate such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, 3-methylbutyl (meth)acrylate, n-hexyl (meth)acrylate, cyclohexyl (meth)acrylate, 2-ethylhexyl (meth)acrylate, n-octyl (meth)acrylate, lauryl (meth)acrylate, tridodecyl (meth)acrylate, stearyl (meth)acrylate and isobornyl (meth)acrylate; a (meth)acrylic acid aromatic ester such as phenyl (meth)acrylate and benzyl (meth)acrylate; a (meth)acrylic acid alkoxy ester such as phenoxyethyl (meth)acrylate and 2-methoxyethyl (meth)acrylate; and 2-hydroxyethyl (meth)acrylate, 2-(diethylamino)ethyl (meth)acrylate and tetrahydrofurfuryl (meth)acrylate.

When the acrylic resin is a copolymer, the acrylic resin may be any one of a random copolymer, a block copolymer, a graft copolymer and a core-shell resin. From the viewpoint of imparting both of high sound insulation performance and handling properties to the intermediate film for laminated glasses according to the present invention, the acrylic resin is preferably an acrylic block copolymer or an acrylic core-shell resin. The acrylic block copolymer is a copolymer having at least one block of a polymer that contains a constituent unit derived from the (meth)acrylic monomer as the main component. For example, when the acrylic block copolymer has two blocks, i.e., a block A and a block B, the acrylic block copolymer may have a form represented by A-(B-A)$_n$ or (A-B)$_n$ (wherein n represents an integer of 1 or more, preferably 1). Either one of the block A and the block B may be a block of a polymer containing the (meth)acrylic monomer as the main component, or each of the blocks A and B may be a block of a polymer containing the (meth)acrylic monomer as the main component. Alternatively, the acrylic block copolymer may additionally have another block. From the viewpoint of imparting both of high sound insulation performance and handling properties to the intermediate film for laminated glasses according to the present invention, the acrylic block copolymer preferably has two or more (meth)acrylic acid ester polymer blocks. For the same reason, the acrylic block copolymer more preferably has two or more alkyl (meth)acrylate polymer blocks, still more preferably a poly(alkyl methacrylate) polymer block and a poly(alkyl acrylate) polymer block. Especially preferably, the acrylic block copolymer is a triblock copolymer in which one poly(alkyl methacrylate) polymer block is bonded to each end of one poly(alkyl acrylate) polymer block.

The acrylic core-shell resin has a bilayer structure composed of a core layer that is an inner layer and a shell layer that is an outer layer, or has a trilayer or higher structure composed of a core layer that is an inner layer, a shell layer that is an outer layer, and one or more intermediate layers arranged between the core layer and the shell layer. The acrylic core-shell resin is a resin in which a polymer containing a constituent unit derived from the (meth)acrylic monomer as the main component is contained in at least one layer selected from a core layer, an intermediate layer and a shell layer. From the viewpoint of imparting high handling properties to the intermediate film for laminated glasses according to the present invention, the shell layer in the acrylic core-shell resin is preferably a methacrylic acid ester polymer, more preferably an alkyl methacrylate polymer. From the viewpoint of imparting high sound insulation performance to the intermediate film for laminated glasses according to the present invention, the core layer in the acrylic core-shell resin is preferably an acrylic acid ester polymer, more preferably an alkyl acrylate polymer.

In one preferred embodiment of the present invention in which the acrylic resin is an acrylic block copolymer or an acrylic core-shell resin, the acrylic resin contains a soft segment in an amount of preferably 30% by mass or more, more preferably 40% by mass or more, still more preferably 50% by mass or more, particularly preferably 60% by mass or more, especially preferably 70% by mass or more, based on the whole amount of the acrylic resin. In this preferred embodiment, the acrylic resin preferably contains a soft segment in an amount of 99% by mass or less, more preferably 90% by mass or less, still more preferably 80% by mass or less, based on the whole amount of the acrylic resin. It is preferred that the amount of the soft segment falls within the above-mentioned ranges, from the viewpoint of achieving excellent sound insulation performance. Examples of the soft segment in the acrylic block copolymer or the acrylic core-shell resin include a homopolymer or copolymer of an alkyl acrylate monomer, a conjugated diene polymer and a derivative thereof. It is preferred that the soft segment is a homopolymer of a single alkyl acrylate monomer or a copolymer of two or more alkyl acrylate monomers. In the acrylic core-shell resin, it is preferred that the soft segment constitutes the core layer.

In the present description, when the block copolymer has two or more polymer blocks having different glass transition temperatures from each other, a polymer block having a glass transition temperature lower than an average value of a highest glass transition temperature and a lowest glass transition temperature is referred to as a "soft segment", and a polymer block having a glass transition temperature higher than the average value is referred to as a "hard segment". In the case where the core-shell resin has two or more layers having different glass transition temperatures from each other, a layer having a glass transition temperature lower than an average value of a highest glass transition temperature and a lowest glass transition temperature is referred to as a "soft segment", and a layer having a glass transition temperature higher than the average value is referred to as a "hard segment". The glass transition temperature of the soft segment is preferably -100 to 100°C, more preferably -50 to 50°C. The glass transition temperature of the hard segment is preferably 0 to 150°C, more preferably 50 to 120°C.

In one preferred embodiment of the present invention in which the acrylic resin is an acrylic block copolymer or an acrylic core-shell resin, the acrylic resin can be produced by a conventional known method such as living anion polymerization and emulsion polymerization.

The styrene-based resin is a polymer containing a constituent unit derived from a styrene compound. Examples of the styrene-based resin include a homopolymer of a styrene compound; and a copolymer which contains a styrene compound as the main component and is composed of the styrene compound and a monomer capable of copolymerizable with the styrene compound. Examples of the styrene compound include styrene; an alkyl-substituted styrene compound such as $\alpha$-methylstyrene, $\alpha$-ethylstyrene, $\alpha$-methyl-p-methylstyrene, o-methylstyrene, m-methylstyrene and p-methylstyrene; and a halogenated styrene compound such as o-chlorostyrene, m-chlorostyrene, p-chlorostyrene, p-bromostyrene, dichlorostyrene, dibromostyrene, trichlorostyrene and tribromostyrene. The styrene compound is preferably styrene or $\alpha$-methyl styrene. Examples of the monomer copolymerizable with the styrene compound include a conjugated diene compound preferably having 4 to 5 carbon atoms, such as 1,3-butadiene and isoprene; a vinyl cyanide compound, such as acrylonitrile, methacrylonitrile, fumaronitrile and maleonitrile; and an acrylic compound such as methyl methacrylate, methyl acrylate, methacrylic acid and acrylic acid. The styrene-based resin can be produced by polymerizing the styrene compound and/or another monomer copolymerizable with the styrene compound by a conventional known method.

From the viewpoint of the productivity of the intermediate film for laminated glasses, the styrene-based resin is preferably a styrene-based block copolymer. The styrene-based block copolymer is a copolymer which has at least one block of a polymer containing a constituent unit derived from the styrene compound. When the styrene-based block copolymer has two blocks, i.e., a block C and a block D, the styrene-based block copolymer may have a form represented by $C\text{-}(D\text{-}C)_n$ or $(C\text{-}D)_n$ (wherein n represents an integer of 1 or more, preferably 1). Either one of the block C and the block D may be a block of a polymer containing a constituent unit derived from the styrene compound, or each of the block C and the block D may be a block of a polymer containing a constituent unit derived from the styrene compound. The styrene-based block copolymer may additionally contain another block. The styrene-based block copolymer is preferably a styrene diene block copolymer which has a block of a polymer containing a constituent unit derived from the styrene compound and a block of a polymer containing a constituent unit derived from a conjugated diene compound.

In one preferred embodiment of the present invention in which the styrene-based resin is a styrene-based block copolymer, the styrene-based resin preferably contains a soft segment in an amount of 30% by mass or more, more preferably 40% by mass or more, still more preferably 50% by mass or more, particularly preferably 60% by mass or more, especially preferably 70% by mass or more, based on the whole amount of the styrene-based resin. In this preferred embodiment, the styrene-based resin preferably contains a soft segment in an amount of 99% by mass or less, more preferably 90% by mass or less, still more preferably 80% by mass or less, based on the whole amount of the styrene-based resin. It is preferred that the amount of the soft segment falls within the above-mentioned ranges, because excellent sound insulation performance can be achieved. Examples of the soft segment in the styrene-based block copolymer include a homopolymer and a copolymer of a conjugated diene compound. The soft segment is preferably a polymer of a conjugated diene compound, more preferably a homopolymer of a conjugated diene compound having 4 to 5 carbon atoms. In a block containing a homopolymer of a conjugated diene compound, some or all of carbon-carbon double bonds derived from the conjugated diene compound may be hydrogenated.

In one preferred embodiment of the present invention in which the styrene-based resin is a styrene-based block copolymer, the styrene-based resin can be produced by a conventional known method such as living anion polymerization.

As the poly(vinyl alcohol) resin, a conventional known poly(vinyl alcohol) resin may be used. For example, the poly(vinyl alcohol) resin can be produced by polymerizing a vinyl ester monomer and then saponifying the produced polymer. As the method for polymerizing a vinyl ester monomer, a conventional known method can be employed, such as a solution polymerization method, a bulk polymerization method, a suspension polymerization method and an emulsion polymerization method. As the polymerization initiator, an azo-type initiator, a peroxide-type initiator, a redox-type initiator or the like can be selected appropriately depending on the polymerization method employed. As the saponification reaction, alcoholysis, hydrolysis or the like utilizing a conventional known alkali catalyst or acid catalyst can be employed. Particularly, a saponification reaction using methanol as a solvent and using a caustic soda (NaOH) catalyst is convenient and most preferred.

As the poly(vinyl acetal) resin, a conventional known poly(vinyl acetal) may be used. For example, the poly(vinyl acetal) resin can be produced by carrying out an acetalization reaction of the poly(vinyl alcohol) resin with an aldehyde in the presence of an acid catalyst. The acid catalyst to be used in the acetalization reaction may be, for example, an organic acid or an inorganic acid, such as acetic acid, para-toluenesulfonic acid, nitric acid, sulfuric acid and hydrochloric acid. Among these compounds, hydrochloric acid, nitric acid and sulfuric acid can be used preferably. For example, as the aldehyde to be reacted with the poly(vinyl alcohol), an aldehyde having 1 to 8 carbon atoms can be used preferably. Examples of the aldehyde having 1 to 8 carbon atoms include formaldehyde, acetaldehyde, propionaldehyde, n-butylaldehyde, isobutylaldehyde, n-pentylaldehyde, n-hexylaldehyde, 2-ethylbutylaldehyde, n-octylaldehyde, 2-ethylhexylaldehyde and benzaldehyde. Among these compounds, an aldehyde having 2 to 5 carbon atoms is used preferably, and an aldehyde having 4 carbon atoms is used more preferably. In particular, n-butylaldehyde is used preferably, because n-butylaldehyde is easily available, the aldehyde remaining after the acetalization reaction can be removed easily by the washing with water or drying, and the produced poly(vinyl acetal) can have an excellent balance between handling properties and mechanical properties. As the poly(vinyl acetal) resin, a poly(vinyl butyral) resin is preferred.

An example of the polyurethane resin is a compound produced by reacting an aliphatic polyisocyanate with a polyol. From the viewpoint of weather resistance, it is preferred that the aliphatic polyisocyanate is 1,6-hexamethylene diisocyanate. Examples of the polyol include, but are not limited to, polyester polyol, polyether polyol and polycarbonate polyol. From the viewpoint of stress relaxation properties, adhesiveness to a glass and the like, it is preferred to use polyester polyol or polyether polyol.

One example of the poly(vinyl carboxylate) resin is a product of the polymerization of a vinyl carboxylate compound by employing a conventional known method, e.g., a solution polymerization method, a bulk polymerization method, a suspension polymerization method, an emulsion polymerization method, and using, as a polymerization initiator, an azo-type initiator, a peroxide-type initiator, a redox-type initiator or the like which is selected appropriately depending on the type of the polymerization method. The vinyl carboxylate compound is preferably a vinyl carboxylate compound having 4 to 20 carbon atoms, more preferably a vinyl carboxylate compound having 4 to 10 carbon atoms, still more preferably a vinyl carboxylate compound having 4 to 6 carbon atoms. If the number of carbon atoms in the vinyl carboxylate compound is smaller than 4, the production of a desired polymer may become difficult. If the number of carbon atoms in the vinyl carboxylate compound is more than 20, the mechanical properties may be deteriorated or the sound insulation properties may be deteriorated. Examples of the vinyl carboxylate compound include vinyl acetate, n-propenyl acetate, isopropenyl acetate, n-butenyl acetate, isobutenyl acetate, vinyl propionate, vinyl butanoate, vinyl pentanoate, vinyl hexanoate, vinyl octanoate, vinyl decanoate, vinyl dodecanoate and vinyl hexadecanoate. In particularly, among these compounds, vinyl acetate, vinyl propionate and vinyl butanoate are used preferably, and vinyl acetate is used more preferably.

An example of the olefin-evinyl carboxylate) copolymer is a conventional known olefin-(vinyl carboxylate) copolymer. As the olefin, a conventional known compound such as ethylene, propylene, n-butene, isobutylene, butadiene and isoprene can be used. Examples of the vinyl carboxylate compound include vinyl acetate, n-propenyl acetate, isopropenyl acetate, n-butenyl acetate, isobutenyl acetate, vinyl propionate, vinyl butanoate, vinyl pentanoate, vinyl hexanoate, vinyl octanoate, vinyl decanoate, vinyl dodecanoate and vinyl hexadecanoate. Among these compounds, an ethylene-(vinyl acetate) copolymer produced using ethylene as the olefin and using vinyl acetate as the vinyl carboxylate compound is preferred, from the viewpoint of achieving excellent sound insulation properties and satisfactory mechanical strength.

The thermoplastic resin is preferably a block copolymer or a core-shell resin each having a hard segment and a soft segment. Examples of the thermoplastic resin include an acrylic block copolymer or an acrylic core-shell resin each having a hard segment containing a poly(alkyl methacrylate) and a soft segment containing a poly(alkyl acrylate) (wherein it is preferred that the core layer corresponds to the soft segment and the shell layer corresponds to the hard segment); and a styrene-based block copolymer having a hard segment containing polystyrene and a soft segment containing a polymer of a conjugated diene compound.

From the viewpoint of achieving both of sound insulation performance and the productivity of the intermediate film for laminated glasses, it is preferred that the thermoplastic resin to be contained in the resin composition A has two or more tan$\delta$ peak temperatures in a temperature range from -100 to 250°C. A tan$\delta$ peak temperature is a temperature at which tan$\delta$ reaches a maximum value thereof. From the viewpoint of achieving both of excellent sound insulation performance in the intermediate film for laminated glasses according to the present invention and excellent productivity of the intermediate film for laminated glasses, it is more preferred that the thermoplastic resin has two or more tan$\delta$ peak temperatures in a temperature range of -70 to 200°C, still more preferably two or more tan$\delta$ peak temperatures in a temperature range of -50 to 120°C. When a lowest temperature and a highest temperature among the two or more tan$\delta$ peak temperatures of the thermoplastic resin are respectively defined as T1 and T2, T1 is preferably -50 to 50°C, more preferably -45 to 45°C, still more preferably -40 to 40°C, from the viewpoint of achieving sound insulation performance. From the viewpoint of the improvement in handling properties, T2 is preferably 50 to 200°C, more preferably 60 to 150°C, still more preferably 70 to 120°C. Examples of the thermoplastic resin include an acrylic block copolymer, an acrylic core-shell resin and a styrene-based block copolymer.

The tan$\delta$ of the thermoplastic resin can be measured in the same manner as in the measurement of tan$\delta$ of the resin composition A using a dynamic viscoelasticity device at a frequency of 0.3 Hz. For example, the tan$\delta$ is measured using a dynamic viscoelasticity device (e.g., Rheogel-E4000 manufactured by UBM Co., Ltd.) at a frequency of 0.3 Hz in a tensile mode. As a measurement sample, a thermoplastic resin sheet having a thickness of 0.8 mm or the like may be used. The measurement sample may be produced by molding a thermoplastic resin into a sheet-like form by means of heat press or the like.

From the viewpoint of achieving good handling properties, the weight average molecular weight ($M_w$) of the thermoplastic resin is preferably 10000 to 1000000, more preferably 20000 to 700000, still more preferably 30000 to 500000. The $M_w$ can be measured by gel permeation chromatography (GPC) and can be calculated in terms of polystyrene standard.

From the viewpoint of the moldability in the production of the intermediate film for laminated glasses, the melt mass-flow rate (MFR) of the thermoplastic resin is preferably 0.01 to 100 g/sec, more preferably 0.02 to 20 g/sec, still more preferably 0.05 to 10 g/sec. The MFR is measured using a flow tester (e.g., Semi-auto melt indexer 2A, manufactured by Toyo Seiki Seisaku-sho, Ltd.) at a temperature of 190°C and a load of 2.16 kgf.

From the viewpoint of sound insulation properties, the glass transition temperature ($T_g$) of the thermoplastic resin is preferably -50 to 50°C, more preferably -45 to 40°C. The $T_g$ can be measured by a differential thermal analysis method (DTA).

The resin composition A contains a damping-property-imparting agent in addition to the thermoplastic resin. The term "damping-property-imparting agent" as used herein refers to a compound which can increase at least one maximum value of tan$\delta$ of the thermoplastic resin which appears in a temperature range from -100 to 250°C when mixed with the thermoplastic resin contained in the resin composition A. Whether or not a given compound ("compound a") can act as a damping-property-imparting agent can be determined by comparing a value of TDP-1 to a value of TDP-2, wherein TDP-1 is one maximum value of tan$\delta$ which appears in a temperature range from -100 to 250°C when tan$\delta$ is measured with respect to a thermoplastic resin contained in the resin composition A and TDP-2 is a maximum value of tan$\delta$ which corresponds to the maximum value TDP-1 when tan$\delta$ is measured with respect to a mixture consisting of 100 parts by mass of the thermoplastic resin and 25 parts by mass of the compound a both contained in the resin composition A. When the relationship represented by TDP-1 < TDP-2 is satisfied, the compound a is determined as a damping-property-imparting agent. In the case where the resin composition A contains a mixture of two or more thermoplastic resins, it is required to determine whether or not the relationship represented by TDP-1 < TDP-2 is satisfied, wherein TDP-1 is a maximum value of tan$\delta$ which appears in a temperature range from -100 to 250°C when tan$\delta$ is measured with respect to a mixture of the thermoplastic resins and TDP-2 is a maximum value of tan$\delta$ which corresponds to the maximum value TDP-1 when tan$\delta$ is measured with respect to a mixture prepared by adding 25 parts by mass of the compound a to 100 parts by mass of the mixture of the thermoplastic resins. It is preferred that the damping-property-imparting agent is a compound capable of increasing the maximum value of tan$\delta$ which appears in a temperature range of preferably -70 to 100°C, more preferably -50 to 80°C, still more preferably -45 to 70°C, particularly preferably -40 to 30°C.

With respect to the TDP-1 and the TDP-2, particularly from the viewpoint that sound insulation properties against both of a frequency in a region where a mass law becomes predominant and a frequency in a coincidence region is easily improved, TDP-2 is preferably higher by 0.1 or more, more preferably 0.2 or more, still more preferably 0.3 or more, than TDP-1.

The damping-property-imparting agent to be contained in the resin composition A has a molecular weight of 100 to 10000. If the molecular weight of the damping-property-imparting agent is smaller than 100, the damping-property-imparting agent may be volatilized during the use of the intermediate film for laminated glasses according to the present invention. If the molecular weight is more than 10000, the compatibility of the damping-property-imparting agent with the thermoplastic resin may be deteriorated. The molecular weight of the damping-property-imparting agent is preferably 200 to 5000, more preferably 250 to 3000, particularly preferably 300 to 2000.

From the viewpoint of avoiding the deterioration in transparency when the intermediate film for laminated glasses according to the present invention is used for a long period, it is preferred that the damping-property-imparting agent to be contained in the resin composition A does not have a melting point at a temperature higher than 30°C. It is preferred that the damping-property-imparting agent is an amorphous compound that does not have a melting point or a crystalline compound having a melting point of 30°C or lower. It is more preferred that the damping-property-imparting agent does not have a melting point at a temperature of 10°C or higher, and it is still more preferred that the damping-property-imparting agent does not have a melting point at a temperature of 0°C or higher. The melting point of the damping-property-imparting agent can be measured using, for example, a differential scanning calorimeter. In the case where the damping-property-imparting agent is a mixture containing two or more compounds, the melting point of the damping-property-imparting agent is determined as the melting point of the mixture.

The damping-property-imparting agent is not particularly limited, as long as the damping-property-imparting agent has a molecular weight of 100 to 10000 and satisfies the requirement for the tan$\delta$ with respect to the relationship with the thermoplastic resin contained in the resin composition A. For example, a compound which is commonly known as a tackifier can be used as the damping-property-imparting agent. More specifically, examples of the damping-property-imparting agent include a rosin-based resin, a fluorene-containing compound, a terpene-based resin, a petroleum resin, a hydrogenated petroleum resin, a coumarone-indene-based resin, a phenol-based resin and a xylene-based resin. The resin composition A may contain a single damping-property-imparting agent, or may contain a combination of two or more damping-property-imparting agents.

Examples of the rosin-based resin include rosin and modified rosin. Examples of rosin include gum rosin, tall oil rosin and wood rosin. Examples of the modified rosin include hydrogenated rosin, disproportionated rosin, polymerized rosin and a rosin ester. An example of the rosin ester is an ester compound of rosin acid, hydrogenated rosin, disproportionated rosin or the like with an alcohol. As the rosin-based resin, a commercially available rosin-based resin may be used without any modification or with further purification. Alternatively, a specific organic acid contained in a rosin-based resin (e.g., abietic acid, neoabietic acid, palustric acid, pimaric acid, isopimaric acid) or a modification product thereof may be used singly, or a plurality of them may be used in combination.

An example of the fluorene-containing compound is a compound having a fluorene skeleton, such as bisphenol fluorene, a bisphenol fluorene alkoxylate.

Examples of the terpene-based resin include a terpene resin mainly formed from $\alpha$-pinene, $\beta$-pinene or dipentene, an aromatic modified terpene resin, a hydrogenated terpene resin and a terpene phenolic resin.

Examples of the (hydrogenated) petroleum resin include a (hydrogenated) aliphatic ($C_5$-type) petroleum resin, a (hydrogenated) aromatic ($C_9$-type) petroleum resin, a (hydrogenated) copolymer-type ($C_5/C_9$-type) petroleum resin, a (hydrogenated) dicyclopentadiene-type petroleum resin and an alicyclic saturated hydrocarbon resin.

It is preferred that the damping-property-imparting agent is a compound having two or more cyclic skeletons. When the damping-property-imparting agent has two or more cyclic skeletons, the intermediate film for laminated glasses according to the present invention can achieve high sound insulation performance advantageously. Examples of the compound having two or more cyclic skeletons include a rosin-based resin, a fluorene-containing compound, a terpene-based resin, a petroleum resin, a hydrogenated petroleum resin, a styrene-based resin, a coumarone -indene-based resin, a phenol-based resin and a xylene-based resin.

From the viewpoint of achieving excellent sound insulation performance, the damping-property-imparting agent is preferably a rosin-based resin or a fluorene-containing compound, more preferably a rosin-based resin, still more preferably rosin or modified rosin, particularly preferably a rosin ester among modified rosin.

In one preferred embodiment of the present invention in which the damping-property-imparting agent is a rosin ester, from the viewpoint of achieving excellent sound insulation performance and from the viewpoint of the compatibility with a thermoplastic resin, the rosin ester is preferably an ester compound of at least one compound selected from the group consisting of rosin acid, hydrogenated rosin and disproportionated rosin with an alcohol having a valency of 1 to 4, more preferably an ester compound of at least one compound selected from the group consisting of rosin acid, hydrogenated rosin and disproportionated rosin with an alcohol having a valency of 1 to 3, still more preferably an ester compound of at least one compound selected from the group consisting of rosin acid, hydrogenated rosin and disproportionated rosin with a monohydric alcohol. The alcohol is not particularly limited, and examples of the alcohol include a monohydric alcohol such as methanol, ethanol, propanol, n-butanol, s-butanol, t-butanol, n-hexanol and n-octanol; a dihydric alcohol such as ethylene glycol, 1,2-propylene glycol, 1,3-propylene glycol, diethylene glycol and triethylene glycol; a trihydric alcohol such as glycerin; and a tetrahydric alcohol such as pentaerythritol. In the preferred embodiment, the rosin ester preferably has a glass transition temperature ($T_g$), of lower than 50°C, more preferably 30°C or lower, still more preferably 10°C or lower. The $T_g$ can be measured by a differential thermal analysis method (DTA).

In one preferred embodiment of the present invention in which the damping-property-imparting agent is a rosin ester, from the viewpoint of compatibility with the thermoplastic resin, the hydroxyl value of the rosin ester is preferably 0 to 200 mgKOH/g, more preferably 0 to 140 mgKOH/g, still more preferably 0 to 100 mgKOH/g, particularly preferably 0 to 50 mgKOH/g, most preferably 0 to 20 mgKOH/g. The hydroxyl value of the rosin ester can be measured in accordance with JIS K0070. In this embodiment, from the viewpoint of weather resistance, the acid value of the rosin ester is preferably 0 to 100 mgKOH/g, more preferably 0 to 50 mgKOH/g, still more preferably 0 to 20 mgKOH/g. The acid value of the rosin ester can be measured in accordance with JIS K2501.

In one preferred embodiment of the present invention in which the damping-property-imparting agent is a rosin ester, from the viewpoint of the handling properties of the rosin ester, the softening point of the rosin ester is preferably 100°C or lower, more preferably 80°C or lower. The softening point of the rosin ester can be measured in accordance with JIS K5902.

In the intermediate film for laminated glasses according to the present invention, the resin composition A contains 100 parts by mass of the thermoplastic resin and 10 to 1000 parts by mass of the damping-property-imparting agent. If the amount of the damping-property-imparting agent based on 100 parts by mass of the thermoplastic resin is less than 10 parts by mass, the intermediate film for laminated glasses according to the present invention which contains a sound insulation layer formed from the resin composition A cannot achieve satisfactory sound insulation properties. If the amount of the damping-property-imparting agent based on 100 parts by mass of the thermoplastic resin is more than 1000 parts by mass, the compatibility of the thermoplastic resin with the damping-property-imparting agent may become a problem. The amount of the damping-property-imparting agent based on 100 parts by mass of the thermoplastic resin is preferably 15 to 800 parts by mass, more preferably 20 to 500 parts by mass, still more preferably 25 to 300 parts by mass, further preferably 35 to 300 parts by mass, particularly preferably 51 to 300 parts by mass.

In the intermediate film for laminated glasses according to the present invention, from the viewpoint of achieving excellent sound insulation performance, the total amount of the thermoplastic resin and the damping-property-imparting agent to be contained in the resin composition A is preferably 30 to 100% by mass, more preferably 40 to 100% by mass, still more preferably 50 to 100% by mass, based on the whole amount of the resin composition A.

In the intermediate film for laminated glasses according to the present invention, it is preferred for the thermoplastic resin and damping-property-imparting agent contained in the resin composition A that the cloud point as measured with respect to a composition consisting of 100 parts by mass of the damping-property-imparting agent and 8 parts by mass of the thermoplastic resin is preferably lower than 150°C, more preferably 100°C or lower, still more preferably 50°C or lower. The lower limit of the cloud point is not particularly limited, as long as the cloud point is -273°C or higher. For example, the cloud point is preferably -100°C or higher, more preferably -80°C or higher. From the viewpoint that the initial transparency of the intermediate film for laminated glasses can be kept at a high level and the transparency is rarely deteriorated when used for a long period, it is preferred that the resin composition A contains a combination of the thermoplastic resin and the damping-property-imparting agent which have the above-mentioned properties. In the case where the resin composition A contains a mixture of two or more types of the thermoplastic resins, it is only required that the cloud point is measured with respect to a composition prepared by adding 8 parts by mass of the mixture to 100 parts by mass of the damping-property-imparting agent. Similarly, in the case where the resin composition A contains two or more types of the damping-property-imparting agents, it is only required that the cloud point is measured with respect to a composition prepared by adding 8 parts by mass of the thermoplastic resin to 100 parts by mass of the mixture.

In one preferred embodiment of the intermediate film for laminated glasses according to the present invention, the resin composition A contains a thermoplastic resin and a damping-property-imparting agent that has a molecular weight of 100 to 10000 and does not have a melting point at a temperature higher than 30°C. In this embodiment, the thermoplastic resin is preferably at least one component selected from the group consisting of an acrylic block copolymer, a styrene-based block copolymer and an acrylic core-shell resin, and the damping-property-imparting agent is preferably at least one component selected from the group consisting of rosin and modified rosin.

In another preferred embodiment of the intermediate film for laminated glasses according to the present invention, the resin composition A contains a thermoplastic resin having two or more tan$\delta$ peak temperatures in a temperature range from -100 to 250°C and a damping-property-imparting agent having a molecular weight of 100 to 10000. In this embodiment, the thermoplastic resin is preferably at least one component selected from the group consisting of an acrylic block copolymer, a styrene-based block copolymer and an acrylic core-shell resin, and the damping-property-imparting agent is preferably at least one component selected from the group consisting of rosin and modified rosin.

In addition to the thermoplastic resin and the damping-property-imparting agent, the resin composition A in the intermediate film for laminated glasses according to the present invention may also contain various additives such as a plasticizer, a heat-shielding material (e.g., an inorganic heat-shielding microparticle or an organic heat-shielding material each capable of absorbing infrared ray), an antioxidant agent, an ultraviolet ray absorber, a light stabilizer, an adhesion force modifier, an anti-blocking agent, a pigment and a dye, as long as the effects of the present invention cannot be impaired.

Examples of the plasticizer that can be contained in the resin composition A include a carboxylic acid ester-type plasticizer such as a monocarboxylic acid ester-type plasticizer and a poly(carboxylic acid) ester-type plasticizer; a phosphoric acid ester-type plasticizer; an organic phosphorous acid ester-type plasticizer; a polymeric plasticizer such as a carboxylic acid polyester-type plasticizer, a carbonic acid polyester-type plasticizer and a poly(alkylene glycol)-type plasticizer; and an ester compound of a hydroxycarboxylic acid such as castor oil and a polyhydric alcohol. Among these compounds, an ester compound of a bivalent alcohol with a monocarboxylic acid is particularly preferred from the viewpoint that the sound insulation properties of the intermediate film for laminated glasses according to the present invention can be improved easily, and triethylene glycol di 2-ethylhexanoate is particularly preferred.

In the case where the resin composition A contains a plasticizer, the content of the plasticizer is preferably more than 0 part by mass, more preferably 3 parts by mass or more, still more preferably 5 parts by mass or more, particularly preferably 10 parts by mass or more, based on 100 parts by mass of the thermoplastic resin contained in the resin composition A. The content of the plasticizer in the resin composition A is preferably 60 parts by mass or less, more preferably 40 parts by mass or less, still more preferably 30 parts by mass or less, based on 100 parts by mass of the thermoplastic resin contained in the resin composition A. When the content of the plasticizer in the resin composition A is equal to or more than the above-mentioned lower limits, the flexibility of the produced intermediate film for laminated glasses tends to be improved and the impact absorbing performance of the intermediate film for laminated glasses tends to be improved. When the content of plasticizer in the resin composition A is equal to or lower than the above-mentioned upper limits, the mechanical strength of the produced intermediate film for laminated glasses tends to be improved. In the intermediate film for laminated glasses according to the present invention produced using the above-mentioned specific resin composition A, even when no plasticizer is added or a plasticizer is added in a smaller amount compared with the amounts to be added to the conventional intermediate films for laminated glasses, it becomes possible to achieve satisfactory sound insulation properties. As a result, the bleeding out of the plasticizer from the sound insulation layer can be prevented easily. In the case where the intermediate film for laminated glasses has such a structure that the sound insulation layer and another layer are laminated together, the migration of the plasticizer that may be contained in the sound insulation layer to another layer can be prevented. From the viewpoint that the amount of the plasticizer to be added is easily reduced, it is preferred to use a resin having a tan$\delta$ peak temperature in a range from -100 to 250°C as the thermoplastic resin and use a damping-property-imparting agent not having a melting point at a temperature higher than 30°C as the damping-property-imparting agent.

The intermediate film for laminated glasses according to the present invention has at least the sound insulation layer formed from the resin composition A. From the viewpoint of improving the handling properties of the intermediate film for laminated glasses at room temperature, it is preferred to use a resin composition A preferably having a creep elongation rate of 0% or more and less than 20%, more preferably 0% or more and less than 10% for the sound insulation layer. When the elongation rate is equal to or lower than the above-mentioned upper limits, the intermediate film for laminated glasses according to the present invention is hardly deformed during the storage at room temperature and the handling properties become better. The elongation rate can be measured by carrying out a creep test under the conditions of 20°C and 20%RH for 24 hours using a sheet having a thickness of 0.8 mm, a width of 1 cm and a length of 10 cm as a measurement sample.

The intermediate film for laminated glasses according to the present invention may be composed of only the sound insulation layer. Alternatively, the intermediate film may also have such a configuration that a protective layer is laminated on at least one surface of the sound insulation layer, including such a configuration that a protective layer is laminated on one surface of the sound insulation layer and such a configuration that protective layers are respectively laminated on both surfaces of the sound insulation layer (i.e., such a configuration that the sound insulation layer is arranged between two protective layers). In the intermediate film for laminated glasses according to the present invention, it is preferred that a protective layer is laminated on at least one surface of the sound insulation layer, because sound insulation properties, as well as mechanical strength, adhesiveness to a glass and handling properties of the intermediate film for laminated glasses are easily improved.

In the case where the intermediate film for laminated glasses according to the present invention has a protective layer, the protective layer is formed from a composition B that contains a resin (b1). The resin (b1) to be contained in the composition B is preferably a thermoplastic resin, such as poly(vinyl acetal), an ethylene-(vinyl acetate) copolymer and an ionomer. These materials are preferred because of excellent mechanical strength, transparency and adhesiveness to a glass.

The composition B preferably contains the resin (b1) in an amount of 40% by mass or more, more preferably 50% by mass or more, still more preferably 60% by mass or more, particularly preferably 80% by mass or more, most preferably 90% by mass or more, based on the whole amount of the composition B. Alternatively, the composition B may contain the resin (b1) in an amount of 100% by mass. If the content of the resin (b1) is less than 40% by mass, the adhesiveness between the protective layer and a glass may be deteriorated or the mechanical strength of the protective layer may become insufficient.

The average remaining hydroxyl group amount of the poly(vinyl acetal) to be contained in the composition B is preferably 10 mol% or more, more preferably 15 mol% or more, still more preferably 20 mol% or more, particularly preferably 25 mol% or more. The average remaining hydroxyl group amount of the poly(vinyl acetal) is preferably 50 mol% or less, more preferably 45 mol% or less, still more preferably 40 mol% or less. If the average remaining hydroxyl group amount is less than 10 mol%, the adhesiveness to a glass may be deteriorated and the sound insulation performance of the intermediate film for laminated glasses according to the present invention may be deteriorated. On the other hand, if the average remaining hydroxyl group amount is more than 50 mol%, water resistance may be deteriorated.

It is preferred that the average remaining vinyl ester group amount of poly(vinyl acetal) is 30 mol% or less. If the average remaining vinyl ester group amount is more than 30 mol%, blocking may easily occur during the production of poly(vinyl acetal) and therefore poly(vinyl acetal) may not be produced easily. The average remaining vinyl ester group amount is preferably 20 mol% or less and may be 0 mol%.

The average acetalization degree of poly(vinyl acetal) is preferably 40 mol% or more, and is preferably 90 mol% or less. If the average acetalization degree is less than 40 mol%, the compatibility with the plasticizer or the like tends to be deteriorated. If the average acetalization degree is more than 90 mol%, a long time may be required for the production of a poly(vinyl acetal) resin which is undesirable from the viewpoint of the process for the production, and satisfactory mechanical strength may not be achieved. The average acetalization degree is more preferably 60 mol% or more, and is still more preferably 65 mol% or more, particularly preferably 68 mol% or more, from the viewpoint of water resistance and compatibility with the plasticizer. The average acetalization degree is also preferably 85 mol% or less, more preferably 80 mol% or less, particularly preferably 75 mol% or less.

The polymerization degree of poly(vinyl acetal) is preferably 100 or more, more preferably 300 or more, still more preferably 1000 or more, still further preferably 1400 or more, particularly preferably 1600 or more. If the polymerization degree of poly(vinyl acetal) is less than 100, penetration resistance and creep resistance properties, particularly creep resistance properties under high-temperature/high-humidity conditions of 85°C and 85%RH, may be deteriorated. The polymerization degree of poly(vinyl acetal) is preferably 5000 or less, more preferably 3000 or less, still more preferably 2500 or less, particularly preferably 2300 or less, most preferably 2000 or less. If the polymerization degree of poly(vinyl acetal) is more than 5000, the formation of a resin film may become difficult. In order to improve the lamination aptitude of the produced intermediate film for laminated glasses and produce a laminated glass having superior appearance, it is preferred that the polymerization degree of poly(vinyl acetal) is 1800 or less. The polymerization degree of poly(vinyl acetal) can be measured, for example, in accordance with JIS K6728.

The average remaining vinyl ester group amount of poly(vinyl acetal) is preferably adjusted to 30 mol% or less. Therefore, it is preferred to use poly(vinyl alcohol) having a saponification degree of 70 mol% or more as a raw material. If the saponification degree of poly(vinyl alcohol) is less than 70 mol%, the transparency or heat resistance property of the resin may be deteriorated, and the reactivity with an aldehyde may also be deteriorated. The saponification degree is more preferably 95 mol% or more.

The saponification degree of poly(vinyl alcohol) can be measured, for example, in accordance with JIS K6726:1944.

As the aldehyde to be used in the acetalization of poly(vinyl alcohol) and the poly(vinyl acetal) resin, the same compounds which are used in the sound insulation layer can also be used.

In the ethylene-(vinyl acetate) copolymer to be contained in the composition B, the ratio of a vinyl acetate moiety based on the total amount of an ethylene moiety and the vinyl acetate moiety is preferably less than 50 mol%, more preferably less than 30 mol%, still more preferably less than 20 mol%, particularly preferably less than 15 mol%, from the viewpoint of achieving mechanical strength and flexibility required for the intermediate film for laminated glasses.

An example of the ionomer to be contained in the composition B is a resin which has an ethylene-derived constituent unit and a constituent unit derived from an $\alpha,\beta$-unsaturated carboxylic acid and in which at least a part of the $\alpha,\beta$-unsaturated carboxylic acid is neutralized with metal ions. In the ethylene-($\alpha,\beta$-unsaturated carboxylic acid) copolymer that serves as a base polymer, the content of the constituent unit derived from the $\alpha$, $\beta$-unsaturated carboxylic acid is preferably 2% by mass or more, more preferably 5% by mass or more. The content of the constituent unit derived from the $\alpha,\beta$-unsaturated carboxylic acid is preferably 30% by mass or less, more preferably 20% by mass or less. In the present invention, from the viewpoint of availability, an ionomer of an ethylene-(acrylic acid) copolymer and an ionomer of an ethylene-(methacrylic acid) copolymer are preferred. Examples of the $\alpha,\beta$-unsaturated carboxylic acid constituting the ionomer include acrylic acid, methacrylic acid, maleic acid, monomethyl maleate, monoethyl maleate and anhydrous maleic acid, and acrylic acid or methacrylic acid is particularly preferred.

If necessary, the composition B may also contain various additives such as a plasticizer (b2), an antioxidant agent, an ultraviolet ray absorber, a light stabilizer, an anti-blocking agent, a pigment, a dye, a functional inorganic compound and a heat-shielding material (e.g., an inorganic heat-shielding microparticle or an organic heat-shielding material each capable of absorbing infrared ray) as a component other than the resin (b1). Particularly when poly(vinyl acetal) is used in the composition B, from the viewpoint of the mechanical strength and sound insulation properties of the produced intermediate film for laminated glasses, it is preferred to contain a plasticizer.

Examples of the plasticizer (b2) include those compounds which are mentioned above as the plasticizers that can be contained in the resin composition A. In the case where the composition B contains the plasticizer (b2), the content thereof is preferably 20 parts by mass or more, more preferably 25 parts by mass or more, still more preferably 30 parts by mass or more, based on 100 parts by mass of the resin (b1). The content of the plasticizer (b2) in the composition B is preferably 60 parts by mass or less, more preferably 55 parts by mass or less, still more preferably 50 parts by mass or less, based on 100 parts by mass of the resin (b1). If the content of the plasticizer (b2) in the composition B is smaller than 20 parts by mass based on 100 parts by mass of the resin (b1), the flexibility of the produced intermediate film for laminated glasses tends to become insufficient and the impact absorbability of the intermediate film for laminated glasses may become a problem. If the content of the plasticizer (b2) in the composition B is more than 60 parts by mass based on 100 parts by mass of the resin (b1), the mechanical strength of the intermediate film for laminated glasses tends to become insufficient. Particularly when poly(vinyl acetal) is used, from the viewpoint of achieving excellent sound insulation properties, it is preferred that the content of the plasticizer (b2) is 35 to 60 parts by mass.

When the temperature at which tanδ shows a largest value, i.e., a maximum value, in the tensile-mode measurement of the dynamic viscoelasticity of a sheet (thickness: e.g., 0.8 mm) produced by molding the composition B that constitutes the protective layer at a frequency of 0.3 Hz is defined as TD (°C) and the temperature at which tanδ shows a largest value, i.e., a maximum value, in the tensile-mode measurement of the dynamic viscoelasticity of a sheet (thickness: e.g., 0.8 mm) produced by molding the resin composition A that constitutes the sound insulation layer at a frequency of 0.3 Hz is defined as TA (°C), it is preferred that TD is larger than TA, more preferably TD is larger than TA by 10°C or higher, still more preferably TD is larger than TA by 20°C or higher. When this requirement is satisfied, an intermediate film for laminated glasses having excellent sound insulation properties and also having excellent mechanical strength, adhesiveness to a glass and handling properties can be produced.

Each of the resin compositions A and B respectively constituting the sound insulation layer and the protective layer can be produced by mixing the resin and other components by a conventional known method. Examples of the mixing method include a melt kneading method using a mixing roll, a plast mill, an extruder or the like; and a method in which components are dissolved in a proper organic solvent and then the solvent is distilled off.

The method for producing the intermediate film for laminated glasses according to the present invention is not particularly limited. It is possible that the resin composition A is kneaded homogeneously, then the resultant product is formed into a sound insulation layer by a publicly known film formation method such as an extrusion method, a calendar method, a press method, a casting method and an inflation method, then a protective layer is optionally produced from the composition B in the same manner, and then the sound insulation layer and the protective layer are laminated together by press molding or the like. Alternatively, it is also possible that the protective layer, the sound insulation layer and other necessary layers are formed by a co-extrusion method. Alternatively, the produced sound insulation layer may be used singly.

Among publicly known film formation methods, a method in which the intermediate film for laminated glasses is produced with an extruder is particularly preferably employed. The resin temperature in the extrusion is preferably 150°C or higher, more preferably 170°C or higher. The resin temperature at the extrusion is also preferably 250°C or lower, more preferably 230°C or lower. If the resin temperature is too high, the used resin is decomposed, and therefore a concern about the deterioration of the resin may be caused. If the temperature is too low, on the contrary, the discharge through the extruder cannot become stable, leading to the mechanical troubles. For the efficient removal of a volatile substance, it is preferred to remove the volatile substance by vacuum through a vent port of the extruder.

The intermediate film for laminated glasses according to this embodiment has at least a sound insulation layer (also referred to as an "A layer", hereinafter) and optionally has a protective layer (also referred to as a "B layer", hereinafter) laminated on at least one surface of the sound insulation layer. The intermediate film may also have such a configuration that protective layers are respectively laminated on both surfaces of the sound insulation layer. When the intermediate film for laminated glasses has a layer other than the sound insulation layer, the lamination configuration may be determined appropriately depending on the intended use. Examples of the lamination configuration include (B layer)/(A layer), (B layer)/(A layer)/(B layer), (B layer)/(A layer)/(B layer)/(A layer) and (B layer)/(A layer)/(B layer)/(A layer)/(B layer). Among these lamination configurations, (B layer)/(A layer)/(B layer) is particularly preferred because the balance between handling properties and sound insulation properties becomes excellent.

It is also possible to include one or more layer other than the A layer and the B layer (wherein the layer is referred to as a "C layer", hereinafter), and examples of the lamination configuration include (B layer)/(A layer)/(C layer)/(B layer), (B layer)/(A layer)/(B layer)/(C layer), (B layer)/(C layer)/(A layer)/(C layer)/(B layer), (B layer)/(C layer)/(A layer)/(C layer)/(C layer), (B layer)/(A layer)/(C layer)/(B layer)/(C layer), (C layer)/(B layer)/(A layer)/(B layer)/(C layer), (C layer)/(B layer)/(A layer)/(C layer)/(B layer)/(C layer) and (C layer)/(B layer)/(C layer)/(A layer)/(C layer)/(B layer)/(C layer). In the above lamination configurations, the components in the C layers may be the same as or different from each other. This matter can apply to the components in the A layer or the B layer.

As the C layer, a layer formed from any publicly-known resin can be used. For example, polyethylene, polypropylene, poly(vinyl chloride), polystyrene, polyurethane, polytetrafluoroethylene, acrylic resin, polyamide, polyacetal, polycarbonate, polyester such as poly(ethylene terephthalate) and poly(butylene terephthalate), a cyclic polyolefin, poly(phenylene sulfide), polytetrafluoroethylene, polysulfone, poly(ether sulfone), polyarylate, a liquid crystal polymer, polyimide and the like can be used. If necessary, the C layer may also contain additives such as a plasticizer, an antioxidant agent, an ultraviolet ray absorber, a light stabilizer, an anti-blocking agent, a pigment, a dye, a heat-shielding material (e.g., an inorganic heat-shielding microparticle or an organic heat-shielding material each capable of absorbing infrared ray) and a functional inorganic compound.

In the intermediate film for laminated glasses according to the present invention, it is preferred that a convex-concave structure is formed on the surface thereof by a conventional known technique such as meltfracture or embossing. As the shape of the meltfracture or embossing, any conventional known one may be employed. When a convex-concave structure is formed on the surface of the intermediate film for laminated glasses according to the present invention, defoaming performance upon the thermal pressure-bonding of the intermediate film for laminated glasses to a glass becomes excellent, which is advantageous.

The thickness of the sound insulation layer in the intermediate film for laminated glasses according to the present invention is preferably 0.005 mm or more, more preferably 0.01 mm or more, still more preferably 0.02 mm or more, further more preferably 0.04 mm or more, still further preferably 0.07 mm or more, particularly preferably 0.1 mm or more, especially preferably 0.15 mm or more, most preferably 0.2 mm or more. The thickness of the sound insulation layer is preferably 5 mm or less, more preferably 4 mm or less, still more preferably 2 mm or less, further more preferably 1.6 mm or less, still further preferably 1.2 mm or less, particularly preferably 1.1 mm or less, especially preferably 1 mm or less, most preferably 0.79 mm or less. The thickness of the sound insulation layer can be measured by a conventional known method using, for example, a contact or non-contact thickness gauge.

In the case where the intermediate film for laminated glasses according to the present invention has a protective layer, the thickness of the protective layer is preferably 0.01 mm or more, more preferably 0.1 mm or more, further more preferably 0.15 mm or more, particularly preferably 0.20 mm or more, most preferably 0.25 mm or more. The thickness of the protective layer is preferably 1.00 mm or less, more preferably 0.70 mm or less, still more preferably 0.60 mm or less, further more preferably 0.50 mm or less, particularly preferably 0.45 mm or less, most preferably 0.4 mm or less. The thickness of the protective layer can be measured in the same manner as in the measurement of the thickness of the sound insulation layer.

With respect to the thickness of the intermediate film for laminated glasses according to the present invention, the lower limit is generally 0.1 mm, preferably 0.2 mm, more preferably 0.3 mm, still more preferably 0.4 mm, particularly preferably 0.5 mm, further preferably 0.6 mm, especially preferably 0.7 mm, most preferably 0.75 mm. The upper limit is 5 mm, preferably 4 mm, more preferably 2 mm, still more preferably 1.6 mm, particularly preferably 1.2 mm, further preferably 1.1 mm, especially preferably 1 mm, most preferably 0.79 mm. The thickness of the intermediate film for laminated glasses can be measured in the same manner as in the measurement of the thickness of the sound insulation layer.

As the glass to be laminated on the intermediate film for laminated glasses according to the present invention, an inorganic glass, e.g., a float plate glass, a polished plate glass, a figured glass, a polished wire glass, a heat-absorbing glass, and a conventional known organic glass, e.g., poly(methyl methacrylate), polycarbonate, can be used without any limitation. These glasses may be colorless or colored. These glasses may be used singly, or two or more of them may be used in combination. The thickness of the glass is preferably 100 mm or less.

A laminated glass in which the intermediate film for laminated glasses according to the present invention is sandwiched between two glasses can be produced by a conventional known method. Examples of the method include a method using a vacuum laminator device, a method using a vacuum bag, a method using a vacuum ring, and a method using a nip roll. A method can also be mentioned, in which a temporary pressure bonding step by the above-mentioned method is performed and then the resultant product is placed in an autoclave for an actual bonding step.

It is preferred that the laminated glass has excellent transparency, and the haze value of the laminated glass is preferably 1% or less, more preferably 0.8% or less, still more preferably 0.5% or less. It is also preferred that the transparency of the laminated glass does not change over time when used for a long period. For example, the haze value of the produced laminated glass is measured immediately after the production of the laminated glass, then the haze value of the laminated glass is measured after storing the laminated glass at 23°C and 50%RH for 25 weeks, and a value determined by subtracting the haze value immediately after the production of the laminated glass from the haze value after 25 weeks is employed as a measure. In this case, a laminated glass preferably having the difference of 50% or less, more preferably 1% or less, still more preferably 0.5% or less is preferred. A laminated glass having the difference of 50% or less is preferred, because the deterioration in transparency, which can be caused as the result of the precipitation of a damping-property-imparting agent (e.g., a compound having at least two cyclic structures) contained additionally in the intermediate film for laminated glasses according to the present invention, rarely occurs even when used for a long period. In the present invention, the haze value can be measured using a haze meter HZ-1 (Suga Test Instruments Co., Ltd.) in accordance with JIS K7136:2000.

The present invention is also directed to a damping resin composition which contains a thermoplastic resin and a damping-property-imparting agent and has a maximum value of tanδ at a temperature of 30°C or lower, wherein the maximum value is more than 3.1. The damping resin composition according to the present invention which has such a tanδ has high sound insulation properties against both of a frequency in a region where a mass law becomes predominant and a frequency in a coincidence region, and also has excellent handling properties. In this regard, the definitions for the frequency in a region where a mass law becomes predominant and the frequency in a coincidence region are the same as those employed in the resin composition A mentioned above, respectively.

The damping resin composition according to the present invention has a maximum value of tanδ at a temperature of 30°C or lower. If the damping resin composition does not have a maximum value of tanδ at a temperature of 30°C or lower, satisfactory sound insulation properties cannot be achieved at a temperature around room temperature. The maximum value of tanδ of the damping resin composition according to the present invention which appears at a temperature of 30°C or lower is more than 3.1. In the case where the damping resin composition according to the present invention has one maximum value of tanδ at a temperature of 30°C or lower, the maximum value is more than 3.1. In the case where the damping resin composition according to the present invention has two or more maximum values of tanδ at a temperature of 30°C or lower, it is only required that at least one of the two or more maximum values is more than 3.1. If the maximum value is 3.1 or less, satisfactory sound insulation properties cannot be achieved. Other explanations about the tanδ and the maximum value are the same as those mentioned above with respect to the resin composition A.

The damping resin composition according to the present invention contains 100 parts by mass of a thermoplastic resin and 10 to 1000 parts by mass of a damping-property-imparting agent. The explanation about the thermoplastic resin is the same as that mentioned above with respect to the thermoplastic resin contained in the resin composition A.

The damping resin composition according to the present invention contains a damping-property-imparting agent in addition to the thermoplastic resin. The explanations about the damping-property-imparting agent are the same as those mentioned above with respect to the damping-property-imparting agent contained in the resin composition A.

The damping-property-imparting agent to be contained in the damping resin composition according to the present invention has a molecular weight of 100 to 10000. If the molecular weight is less than 100, the damping-property-imparting agent may be volatilized when the damping resin composition according to the present invention is used in an intermediate film for laminated glasses. If the molecular weight is more than 10000, the compatibility with the thermoplastic resin may be deteriorated. The molecular weight of the damping-property-imparting agent is preferably 200 to 5000, more preferably 250 to 3000, particularly preferably 300 to 2000.

From the viewpoint of preventing the deterioration in transparency when the damping resin composition according to the present invention is used for a long period, it is preferred that the damping-property-imparting agent to be contained in the damping resin composition according to the present invention does not have a melting point at a temperature higher than 30°C. The damping-property-imparting agent is preferably an amorphous compound that does not have a melting point or a crystalline compound having a melting point of 30°C or lower. It is more preferred for the damping-property-imparting agent not to have a melting point at a temperature of 10°C or higher, and it is still more preferred not to have a melting point at a temperature of 0°C or higher. The melting point of the damping-property-imparting agent can be measured with, for example, a differential scanning calorimeter. In the case where the damping-property-imparting agent is a mixture containing two or more compounds, the melting point of the damping-property-imparting agent is a melting point of the mixture.

The damping-property-imparting agent is not particularly limited, as long as the damping-property-imparting agent has a molecular weight of 100 to 10000 and meets the requirement about the tanδ in the relationship with the thermoplastic resin contained in the damping resin composition according to the present invention. Examples of the damping-property-imparting agent include those compounds which are mentioned above as the examples of the damping-property-imparting agent to be contained in the resin composition A.

The damping resin composition according to the present invention contains 100 parts by mass of a thermoplastic resin and 10 to 1000 parts by mass of a damping-property-imparting agent. If the amount of the damping-property-imparting agent based on 100 parts by mass of the thermoplastic resin is less than 10 parts by mass, satisfactory sound insulation properties cannot be achieved when the damping resin composition according to the present invention is used in a molded article such as a sound-insulating film. If the amount of the damping-property-imparting agent based on 100 parts by mass of the thermoplastic resin is more than 1000 parts by mass, the compatibility of the thermoplastic resin with the damping-property-imparting agent may become a problem. The preferred amount of the damping-property-imparting agent based on 100 parts by mass of the thermoplastic resin, the preferred total amount of the thermoplastic resin and the damping-property-imparting agent, the explanations about the cloud point, and preferred embodiments are the same as those mentioned above with respect to the amounts, explanations and preferred embodiment of the resin composition A.

In one preferred embodiment of the damping resin composition according to the present invention, the damping resin composition contains a thermoplastic resin and a damping-property-imparting agent that has a molecular weight of 100 to 10000 and does not have a melting point at a temperature higher than 30°C. In this embodiment, it is preferred that the thermoplastic resin is at least one component selected from the group consisting of an acrylic block copolymer, a styrene-based block copolymer and an acrylic core-shell resin, and the damping-property-imparting agent is at least one component selected from the group consisting of rosin and modified rosin.

In another preferred embodiment of the damping resin composition according to the present invention, the damping resin composition contains a thermoplastic resin having two or more tanδ peak temperatures in a temperature range from -100 to 250°C and a damping-property-imparting agent having a molecular weight of 100 to 10000. In this embodiment, it is preferred that the thermoplastic resin is at least one resin selected from the group consisting of an acrylic block copolymer, a styrene-based block copolymer and an acrylic core-shell resin, and the damping-property-imparting agent is at least one agent selected from the group consisting of rosin and modified rosin.

In addition to the thermoplastic resin and the damping-property-imparting agent, the damping resin composition according to the present invention may also contain various additives as long as the effects of the present invention cannot be deteriorated. The explanations of the additives are the same as those mentioned above with respect to the additives contained in the resin composition A.

From the viewpoint of making the handling properties at room temperature better during the production of a molded article from the damping resin composition according to the present invention, it is preferred to use a resin composition preferably having a creep elongation rate of 0% or more and less than 20%, more preferably 0% or more and less than 10%. When the elongation rate is equal to or less than the above-mentioned upper limits, the damping resin composition according to the present invention is less likely to be deformed during the storage at room temperature and the handling properties of the damping resin composition becomes good. The elongation rate can be measured by carrying out a creep test for 24 hours under the conditions of 20°C and 20%RH using a sheet having a thickness of 0.8 mm, a width of 1 cm and a length of 10 cm as a measurement sample.

The damping resin composition according to the present invention can be produced by mixing the thermoplastic resin, the damping-property-imparting agent and other components together by a conventional known method. Examples of the mixing method include a melt kneading method using a mixing roll, a plast mill or an extruder and a method in which the components are dissolved in a proper organic solvent and then the solvent is distilled off.

The damping resin composition according to the present invention has excellent handling properties at room temperature and also has good melt moldability. Therefore, the damping resin composition according to the present invention can be molded into a molded article such as a component that can be used in various use applications for which damping properties and sound insulation properties are required. Examples of the molded article include a conveyer belt, a keyboard, a laminate, a film or sheet for various packaging containers, a hose, a tube, an automotive component and a machine component. For example, a film produced from the damping resin composition according to the present invention may be used as an intermediate film for a laminated glass having sound insulation properties.

It is preferred that the molded article (e.g., a film) produced using the damping resin composition according to the present invention has excellent transparency. For example, the transparency can be determined employing, as a measure, a haze value of a laminated glass produced by sandwiching a molded article comprising a sheet formed from the damping resin composition according to the present invention between two glasses. For example, the haze value is preferably 3% or less, more preferably 1% or less, still more preferably 0.5% or less. It is also preferred that the transparency of a molded article produced using the damping resin composition according to the present invention does not change over time when used for a long period. For example, a value obtained by measuring a haze value of the laminated glass immediately after the production thereof, then measuring a haze value of the laminated glass after the storage of the laminated glass at 23°C and 50%RH for 25 weeks, and then subtracting the haze value immediately after the production from the haze value after 25 weeks, is employed as a measure. The difference is preferably 50% or less, more preferably 1% or less, still more preferably 0.5% or less. A laminated glass having the difference of 50% or less is preferred, because the deterioration in transparency, which can be caused as the result of the precipitation of a damping-property-imparting agent (e.g., a compound having at least two cyclic structures) contained in a molded article produced using the damping resin composition according to the present invention into the molded article, is likely to be prevented even when used for a long period. In the present invention, the haze value can be measured using a haze meter HZ-1 (Suga Test Instruments Co., Ltd.) in accordance with JIS K7136:2000.

The damping resin composition according to the present invention has high melt adhesiveness to various materials. Therefore, a molded article may be produced only from the damping resin composition according to the present invention, or a composite molded article may be produced from a combination of the damping resin composition according to the present invention and other material. The form of the composite molded article is not particularly limited and is, for example, a laminate. Examples of the other material that can be combined with the damping resin composition according to the present invention include a thermoplastic resin, a heat-curable resin, paper, a metal, a wood and ceramic.

For example, the composite molded article may be produced by melt-coating the other material with the damping resin composition according to the present invention, or may be produced by introducing the melted damping resin composition according to the present invention between two or more other materials and then bonding and integrating these materials together, or may be produced by filing a mold with a melted product of the damping resin composition according to the present invention while placing the other material in the mold and then bonding and integrating these materials together, or, when the other material is thermoplastic, may be produced by co-extruding the damping resin composition according to the present invention and the other material and then bonding and integrating these materials together.

Examples of the thermoplastic resin that is suitable as the other material include a polystyrene-based resin; an olefin polymer; a polyurethane resin; a polyamide resin; a polyester resin; a polyvinylidene chloride resin; a poly(vinyl chloride)-based resin; a polycarbonate resin; an acrylic resin; polyoxymethylene resin; an ethylene-(vinyl acetate) copolymer saponification product; a resin such as a copolymer of an aromatic vinyl compound with at least one compound selected from the group consisting of a vinyl cyanide compound, a conjugated diene compound and an olefin compound; and a composition containing thereof.

The molded article produced using the damping resin composition according to the present invention is not particularly limited, and can be used as: an automotive interior component such as an instrument panel, a center panel, a center console panel, a door trim, a pillar, an assist grip, a handle and an airbag cover; an automotive exterior component such as a mall and a bumper; a home electric appliance component such as a vacuum cleaner bumper, a refrigerator door stop, a camera grip, an electric tool grip, a remote controller switch and various key tops for OA devices; a sport product such as swimming goggles; various types of covers; various industrial components with packing for achieving wear resistance, air tightness, sound insulation, vibration insulation and the like; a curled electric code coating; various films for foods, medical or agricultural packaging or the like; a building material such as wallpaper and a decorative plate; and an electric/electronic component such as a belt, a hose, a tube, a mat, a sheet and a sound-deadening gear.

EXAMPLES

Hereinbelow, the present invention will be described specifically with reference to Examples and Comparative Examples. However, these examples are not intended to limit the scope of the present invention.

First, the prevent invention will be described in more detail with reference to Examples 1 to 16 and Comparative Examples 1 to 7.

[Evaluation methods]

(Tan$\delta$ of thermoplastic resin and resin composition)

Each of a thermoplastic resin and a resin composition was pressed with a heat press machine at 150°C and 100 kg/ cm$^2$ for 30 minutes to produce a sheet having a thickness of 0.8 mm. The obtained sheet was cut into a specimen having a width of 3 mm to obtain a dynamic viscoelasticity measurement sample. The measurement sample was analyzed in a tensile mode with a dynamic viscoelasticity device (Rheogel-E4000 manufactured by UBM Co., Ltd.) while heating from -100°C to 250°C at a temperature rising rate of 3°C/min, a distance between chucks of 20 mm, a frequency of 0.3 Hz, a displacement of 75.9 $\mu$m and an automatic static load of 26 g. From the obtained result, a maximum value of a loss tangent tan$\delta$ (= (loss elastic modulus)/(storage modulus)) appearing at a temperature of 100°C or lower, and a temperature at which the tan$\delta$ became maximum were determined.

(Cloud point)

A damping-property-imparting agent (100 parts by mass) and a thermoplastic resin (8 parts by mass) were placed in a test tube having a diameter of 3 cm, and the test tube was heated to 150°C using an oil bath while stirring with a magnetic stirrer to dissolve the thermoplastic resin. The test tube was taken from the oil bath, and the solution was visually observed in the course of cooling to room temperature while stirring, and a temperature at which a part of the solution was clouded was determined as a cloud point. When the thermoplastic resin was not dissolved at 150°C, the cloud point was determined as a temperature higher than 150°C.

(Sound transmission loss of laminated glass)

Each of the laminated glasses produced in Examples and Comparative Examples mentioned below was cut into a specimen having a size of 25 mm × 300 mm and was then vibrated with the vibration generator (the compact vibration generator 512-A manufactured by EMIC Corporation), then a frequency response function at this point of time was detected with the FFT analyzer (DS-2100 manufactured by Ono Sokki Co., Ltd.), and then a loss coefficient in a third anti-resonance mode at each of temperatures of 0°C, 5°C, 10°C, 15°C, 20°C, 25°C, 30°C, 35°C and 40°C was determined using the servo analysis software (DS-0242 manufactured by Ono Sokki Co., Ltd.). Sound transmission losses of 2000 Hz, 2500 Hz, 3150 Hz, 4000 Hz, 5000 Hz and 6300 Hz at 0°C, 5°C, 10°C, 15°C, 20°C, 25°C, 30°C, 35°C and 40°C were calculated from the loss coefficients and the values of third anti-resonance frequencies determined in the above-mentioned test, and then an average value of the sound transmission losses was obtained. In Table 4, the temperature at which the average value of the sound transmission losses was largest (wherein the temperature is simply written as "Temperature" in Table 4), the average value at the temperature (wherein the average value is simply written as "Average value" in Table 4), and the sound transmission loss value at 5000 Hz (wherein the loss value is simply written as "5000 Hz" in Table 4) are shown. A sound transmission loss is more superior in a wide frequency range including a region in which the so-called mass law becomes predominant, with the increase in the average value. It is demonstrated that a sample having an excellent sound transmission loss at 5000 Hz has excellent sound insulation properties against a frequency in a coincidence region.

(Handling properties at room temperature)

A sheet of each of the thermoplastic resin and the resin composition, which was produced in the same manner as in the evaluation on tanδ and had a thickness of 0.8 mm, was cut into a specimen having a length of 10 cm and a width of 1 cm to prepare a measurement sample. The sample was maintained at 20°C and 20%RH for 24 hours for humidity conditioning treatment, the sheet was then suspended vertically under the conditions of 20°C and 20%RH, and then a creep test was carried out to determine an elongation rate after 24 hours. The elongation rate was evaluated in accordance with the following criteria. The handling properties at room temperature became more superior with the increase in the elongation rate, i.e., in the order of A, B, C and D.

Criterial for the evaluation of elongation rate:

A: 0% or more and less than 10%
B: 10% or more and less than 20%
C: 20% or more and less than 50%
D: 50% or more

(Transparency and change in transparency over time of laminated glass)

Each of the laminated glasses produced in Examples and Comparative Examples mentioned below was measured with respect to a haze value immediately after the production thereof. After the production of the laminated glasses, each of the laminated glasses was stored at 23°C and 50%RH for 25 weeks and was then evaluated with respect to the change in the haze value over time. The amount of change in a haze value over time was calculated in accordance with the following equation.

$$(\text{Amount of change in haze value over time}) = (\text{haze value after storage for 25 weeks}) - (\text{haze value immediately after production})$$

With the decrease in the amount of change in haze value over time, i.e., in the order of A, B, C, D and E, the change in transparency over time is less likely to occur, and the transparency is hardly decreased when the laminated glass is used for a long period. Therefore, a laminated glass having a smaller amount of change in haze value over time is preferred.

Evaluation criteria for the amount of change in haze value over time:

A: 0.5% or less
B: more than 0.5% and 1% or less
C: more than 1% and 50% or less
D: more than 50% and 70% or less
E: more than 70%

In Examples and Comparative Examples mentioned below, the thermoplastic resins listed in Table 1 and the damping-property-imparting agents listed in Table 2 were used. In the column "Two or more peak temperatures" in Table 1, the wording "satisfied" is written when the requirement that the used thermoplastic resin had two or more tanδ peak temperatures in a temperature range from -100 to 250°C was satisfied, while the wording "not satisfied" is written when the requirement was not satisfied.

**EP 3 521 260 A1**

[Table 1]

| Symbols | Components | Two or more peak temperatures |
|---|---|---|
| AB-1 | acrylic triblock copolymer (A-B-A)<br>A: PMMA block (content: 22 mass%)<br>B: PBA block (content: 78 mass%) | satisfied |
| AB-2 | Acrylic triblock copolymer (A-B-A)<br>A: PMMA block (content: 30 mass%)<br>B: PBA block (content: 70 mass%) | satisfied |
| AB-3 | acrylic triblock copolymer (A-B-A)<br>A: PMMA block (content: 50 mass%)<br>B: PBA block (content: 50 mass%) | satisfied |
| ACS-1 | acrylic core-shell polymer<br>shell component: PMMA is contained as main component (content: 30 mass%)<br>core component: PBA is contained as main component (content: 70 mass%) | satisfied |
| ACS-2 | acrylic core-shell polymer<br>shell component: PMMA is contained as main component (content: 10 mass%)<br>core component: PBA is contained as main component (content: 90 mass%) | satisfied |
| SDB-1 | styrene-diene triblock copolymer (A-B-A)<br>A: polystyrene block (content: 12 mass%)<br>B: hydrogenated poly(isoprene/butadiene) block (content: 88 mass%) | satisfied |
| SDB-2 | styrene-diene triblock copolymer (A-B-A)<br>A: polystyrene block (content: 4 mass%)<br>B: hydrogenated poly(isoprene/butadiene) block (content: 95 mass%) | satisfied |
| PVAc-1 | poly(vinyl acetate), polymerization degree: 1700 | not satisfied |
| PVAc-2 | poly(vinyl acetate), polymerization degree: 2400 | not satisfied |
| PVB-1 | poly(vinyl butyral)<br>polymerization degree: 1700, butyralization degree: 75 mol%, remaining hydroxyl group amount: 19 mol%, remaining vinyl ester group amount: 6 mol% | not satisfied |
| PVB-2 | poly(vinyl butyral)<br>polymerization degree: 1700, butyralization degree: 69 mol%, remaining hydroxyl group amount: 30 mol%, remaining vinyl ester group amount: 1 mol% | not satisfied |
| PBA-1 | poly(butyl acrylate) | not satisfied |
| PMMA: poly(methyl methacrylate)<br>PBA: polymer containing poly(butyl acrylate) as main component | | |

19

[Table 2]

| Symbols | Component Names | Melting point [°C] | Molecular weight | Hydroxyl group value [mgKOH/g] | Acid value [mgKOH/g] | Form at 30°C | $T_g$ or softening point [°C] |
|---|---|---|---|---|---|---|---|
| RE-1 | hydrogenated rosin methyl ester | not having at 30°C or higher | 310 - 330 | 0 | 0 | liquid | -29 ($T_g$) |
| RE-2 | rosin methyl ester | not having at 30°C or higher | 310 - 330 | 0 | 0 | liquid | -23 ($T_g$) |
| RE-3 | hydrogenated rosin pentaerythritol ester | not having at 30°C or higher | 1300 - 1350 | 0 | 5 | solid | 95 (softening point) |

[Production Example 1: Synthesis of AB-1]

A 1-liter three-necked flask was purged with nitrogen, then a toluene solution (18 mL) containing toluene (390 g), N,N,N',N'',N''-pentamethyldiethylenetriamine (0.30 mL) and isobutylbis(2,6-di-t-butyl-4-methylphenoxy) aluminum (3.0 mmol) was added thereto at room temperature, and then a cyclohexane/n-hexane mixed solution (0.8 mL) containing sec-butyllithium (1.0 mmol) was further added thereto. Methyl methacrylate (17 mL) was added to the resultant solution, and then the solution was stirred at room temperature (25°C) for 1 hour (at this point of time, the solution was colorless). Subsequently, the inner temperature of the polymerization solution was cooled to -12°C, and then n-butyl acrylate (55 mL) was added dropwise over 6 hours to cause the reaction. Methyl methacrylate (7 mL) was further added to the solution, and then the resultant solution was allowed to react at room temperature while stirring. After 10 hours (at this point of time, the solution was colorless), methanol (1 g) was added to the reaction solution to terminate the polymerization. The reaction solution after the termination of the polymerization was poured into a large volume of methanol to cause the precipitation of white precipitate, and the white precipitate was collected and dried to produce AB-1. AB-1 was a PMMA (11% by mass)-PBA (78% by mass)-PMMA (11% by mass) triblock copolymer.

[Production Example 2: Synthesis of AB-2]

The same procedure as in Production Example 1 was carried out, except that the amount of methyl methacrylate that was added firstly was changed to 8.8 mL, the amount of n-butyl acrylate used was changed to 42 mL and the amount of methyl methacrylate that was added thereafter was changed to 8.8 mL. In this manner, AB-2 was produced. AB-2 was a PMMA (15% by mass)-PBA (70% by mass)-PMMA (15% by mass) triblock copolymer.

[Production Example 3: Synthesis of AB-3]

The same procedure as in Production Example 1 was carried out, except that the amount of methyl methacrylate that was added firstly was changed to 15 mL, the amount of n-butyl acrylate used was changed to 32 mL, and the amount of methyl methacrylate that was added thereafter was changed to 15 mL. In this manner, AB-3 was produced. AB-3 was a PMMA (25% by mass)-PBA (50% by mass)-PMMA (25% by mass) triblock copolymer.

[Production Example 4: Synthesis of ACS-1]

Into a 2-L separable flask were charged pure water (800 g), sodium dodecylbenzene sulfonate (Neoperex G-15, manufactured by Kao Corporation) (7 g) and a poly(carboxylic acid)-type high molecular weight surfactant (Poise 520, manufactured by Kao Corporation) (5 g). The resultant mixture was stirred and dissolved together at 80°C. Potassium peroxodisulfate (80 mg) was added to the solution, then a mixture composed of n-butyl acrylate (220 g), styrene (50 g), allyl methacrylate (2 g) and the phosphoric acid ester-type compound (CS-141, manufactured by Adeka Corporation) (1 g) was added to the resultant solution over 60 minutes, and then the solution was further reacted for 60 minutes to cause the polymerization of the first layer (the core layer). Subsequently, potassium peroxodisulfate (30 mg) was added to the solution, then a mixture composed of n-butyl acrylate (84 g), styrene (17 g), methyl methacrylate (5 g), allyl methacrylate (1 g) and CS-141E (0.5 g) was added to the resultant solution over 40 minutes, and then the solution was further reacted for 60 minutes to cause the polymerization of the second layer (the core layer). Subsequently, potassium peroxodisulfate (48 mg) was added to the solution, then a mixture composed of methyl methacrylate (150 g), methyl acrylate (8 g), n-octyl mercaptan (1.6 g) and CS-141 (0.8 g) was added to the solution over 40 minutes, and then the solution was reacted for 60 minutes to cause the polymerization of the third layer (the shell layer). The resultant solution was cooled to 40°C or lower, was transferred in a metallic container, was cooled to -20°C overnight to be frozen, and was then added to water having a temperature of 40°C, and the resultant resin was filtrated off, collected and dried to produce ACS-1.

[Production Example 5: Synthesis of ACS-2]

The same procedure as in the synthesis of ACS-1 was carried out, except that the amount of methyl methacrylate was changed to 39 g, the amount of methyl acrylate was changed to 2 g and the amount of n-octyl mercaptan was changed to 0.4 g in the polymerization of the third layer. In this manner, ACS-2 was produced.

[Production Example 6: Synthesis of SDB-1]

Into a pressure-tight container that had been purged with nitrogen and dried were charged cyclohexane (50 kg) that was served as a solvent, a solution of sec-butyllithium in cyclohexane having a concentration of 10.5% by mass (76 g) (the substantial amount of sec-butyllithium added: 8.0 g) that served as an anion polymerization initiator, and tetrahydrofuran (310 g) that was served as a Lewis base.

After the inside of the pressure-tight container was heated to 50°C, styrene (1) (0.5 kg) was added to the solution, the resultant solution was polymerized for 1 hour. Subsequently, a mixed solution of isoprene (8.2 kg) and butadiene (6.5 kg) was added to the solution, the solution was polymerized for 2 hours, styrene (2) (1.5 kg) was added to the solution, and then the resultant solution was polymerized for 1 hour to produce a reaction solution containing a polystyrene-poly(isoprene/butadiene)-polystyrene triblock copolymer.

To the reaction solution was added a Ziegler-type hydrogenation catalyst formed from nickel octylate and trimethyl aluminum under a hydrogen atmosphere. The resultant solution was reacted under the conditions of a hydrogen pressure of 1 MPa and 80°C for 5 hours. After the reaction solution was allowed to cool and the pressure was released, the catalyst was removed by washing with water, and then the resultant solution was dried in a vacuum. In this manner, a hydrogenated product of a polystyrene-poly(isoprene/butadiene)-polystyrene triblock copolymer, SDB-1 (the content of the polystyrene block was 12% by mass), was produced.

[Production Example 7: Synthesis of SDB-2]

The same procedure as in the synthesis of SDB-1 was carried out, except that the amount of the solution of sec-butyllithium in cyclohexane was changed to 20 g, the amount of tetrahydrofuran was changed to 290 g, the amount of each of styrene (1) and styrene (2) was changed to 0.16 kg, the amount of isoprene was changed to 4.4 kg and the amount of butadiene was changed to 3.5 kg. In this manner, a hydrogenated product of a polystyrene-poly(isoprene/butadiene)-polystyrene triblock copolymer, SDB-2 (the content of a polystyrene block was 4% by mass), was produced.

[Production Example 8: Synthesis of poly(vinyl acetate) PVAc-1]

Into a 6-L separable flask equipped with a stirrer, a thermometer, a nitrogen inlet tube and a reflux condenser were charged a vinyl acetate monomer (VAM) (2555 g) that had been deoxidized in advance, methanol (MeOH) (945 g) and a 1% solution of tartaric acid in methanol in such an amount that the content of tartaric acid in the VAM became 20 ppm. The temperature of the inside of the flask was adjusted to 60°C while blowing nitrogen into the flask. A 0.55-mass% solution of di-n-propyl peroxydicarbonate in methanol was prepared, and then a portion (18.6 mL) of the solution was added into the flask to initiate polymerization. In this procedure, the amount of di-n-propyl peroxydicarbonate added was 0.081 g. The solution of di-n-propyl peroxydicarbonate in methanol was added successively at a rate of 20.9 mL/h until the polymerization was completed. During the polymerization, the temperature in the flask was kept at 60°C. Four hours after the initiation of the polymerization at which the solid concentration in the polymerization solution became 25.1%, methanol (1200 g) containing sorbic acid (0.0141 g) (corresponding to 3 molar equivalents of di-n-propyl peroxydicarbonate that remained in an undecomposed form in the polymerization solution) was added, and then the polymerization solution was cooled to terminate the polymerization. The rate of polymerization of the VAM upon the termination of the polymerization was 35.0%. After the polymerization solution was cooled to room temperature, and the pressure in the flask was reduced with a water aspirator to distil off the VAM and methanol, thereby causing poly(vinyl acetate) to be precipitated. Methanol (3000 g) was added to the precipitated poly(vinyl acetate), poly(vinyl acetate) was dissolved while warming the solution at 30°C, and then the pressure in the flask was reduced with a water aspirator to distil off VAM and methanol, thereby causing poly(vinyl acetate) to be precipitated. Poly(vinyl acetate) was dissolved in methanol, and then the precipitation procedure was further repeated two times. Methanol was added to the precipitated poly(vinyl acetate) to produce a 40-mass% solution of poly(vinyl acetate) (PVAc-1) in methanol in which the VAM removal rate was 99.8%.

A portion of the obtained solution of PVAc-1 in methanol was used to measure a polymerization degree. A 10% solution of sodium hydroxide in methanol was added to the solution of PVAc-1 in methanol in such a manner that the molar ratio of sodium hydroxide to a vinyl acetate unit in the poly(vinyl acetate) became 0.1. At a point of time at which a gelled product was produced, the gel was pulverized and then was subjected to Soxhlet extraction with methanol for three days to produce poly(vinyl alcohol)-1. The poly(vinyl alcohol)-1 was dried, and the viscosity average polymerization degree thereof was measured. The polymerization degree was 1700.

[Production Example 9: Synthesis of PVAc-2]

The same procedure as in the synthesis of PVAc-1 was carried out, except that the reaction time was changed. In this manner, PVAc-2 was produced. Saponification was carried out in the same manner as in the synthesis of PVAc-1 to produce poly(vinyl alcohol)-2, and the viscosity average polymerization degree of the poly(vinyl alcohol)-2 was measured. The viscosity average polymerization degree of poly(vinyl alcohol)-2 was 2400.

[Production Example 10: Synthesis of PVB-1]

Into 5-L separable flask equipped with a reflux condenser, a thermometer and an anchor type stirring blade were charged ion-exchanged water (3720 g) and poly(vinyl alcohol) (viscosity average polymerization degree: 1700, saponification degree: 94 mol%) (280 g). The content was heated to 95°C to dissolve the content completely. Subsequently, the content was gradually cooled to 12°C over about 60 minutes while stirring at 120 rpm, then butylaldehyde (173.0 g) and 20% hydrochloric acid (201.6 mL) were added thereto, and then a butyralization reaction was carried out for 25 minutes. Subsequently, the reaction solution was heated to 65°C over 120 minutes, was retained at 65°C for 120 minutes, and was then cooled to room temperature to cause the precipitation of a resin. The resin was washed with ion-exchanged water, an excessive amount of an aqueous sodium hydroxide solution was added to the solution to neutralize the remaining acid, and the neutralized solution was further washed with an excessive amount of ion-exchanged water, dehydrated and dried to produce poly(vinyl butyral) PVB-1. PVB-1 was measured in accordance with JIS K6728-1977. As a result, the butyralization degree was 75 mol%, the remaining hydroxyl group amount was 19 mol%, and the remaining vinyl ester group amount was 6 mol%.

[Production Example 11: Synthesis of PVB-2]

The same procedure as in the synthesis of PVB-1 was carried out, except that poly(vinyl alcohol) (280 g) having a viscosity average polymerization degree of 1700 and a saponification degree of 99 mol% was used in place of the raw material poly(vinyl alcohol) and the amount of butylaldehyde used was changed to 160 g. In this manner, PVB-2 was produced. PVB-2 was measured in accordance with JIS K6728-1977. As a result, the butyralization degree was 69 mol%, the remaining hydroxyl group amount was 30 mol% and the remaining vinyl ester group amount was 1 mol%.

[Production Example 12: Synthesis of PBA-1]

The same procedure as in the synthesis of ACS-1 was carried out, except that the polymerization of the third layer was not carried out. In this manner, PBA-1 was produced.

[Example 1]

The thermoplastic resin AB-1 and the damping-property-imparting agent RE-1 were mixed together in the amounts shown in Table 3 at 120°C for 5 minutes with a laboplast mill to produce a resin composition A-1. In Table 3, the amount (parts by mass) of the damping-property-imparting agent represents the amount of the damping-property-imparting agent based on 100 parts by mass of the thermoplastic resin. The maximum value of tanδ (TDP-1) of the thermoplastic resin AB-1 which appeared at -31.7°C was 1.1, while the maximum value of tanδ (TDP-2) of a mixture composed of 100 parts by mass of the thermoplastic resin AB-1 and 25 parts by mass of RE-1, which corresponds to the aforementioned maximum value and appears at -30.5°C, was 1.5. Therefore, it was confirmed that RE-1 was a damping-property-imparting agent in the resin composition containing the thermoplastic resin AB-1.

[Comparative Example 1]

No damping-property-imparting agent was added, and thermoplastic resin was used without any modification.

[Examples 2 to 16 and Comparative Examples 2 to 7]

The same procedure as in Example 1 was carried out, except that the types of the thermoplastic resin and the damping-property-imparting agent and the amount of the damping-property-imparting agent based on 100 parts by mass of the thermoplastic resin were changed to those shown in Table 3. In this manner, resin compositions were produced. Comparison was made between a maximum value of tanδ (TDP-1) of each of thermoplastic resins used in Examples 2 to 16 and Comparative Examples 2 to 7 which appeared in a temperature range from -100 to 250°C and a maximum value of tanδ (TDP-2) of a mixture consisting of 100 parts by mass of each of the thermoplastic resins and 25 parts by mass of each compounds listed in the column "damping-property-imparting agent" in Table 3 which corresponds to the aforementioned maximum value. As a result, it was found that the relationship represented by the formula: TDP-1 < TDP-2 was satisfied when the compounds listed in Table 2 were used, and therefore it was confirmed that all of the compounds listed in Table 2 were damping-property-imparting agents in resin compositions respectively containing the thermoplastic resins listed in Table 3. With respect to 3G8 and DBA in Table 3, it was confirmed that the relationship represented by the formula: TDP-1 < TDP-2 was not satisfied and therefore these substances were not damping-property-imparting agents.

With respect to each of the obtained resin compositions and the thermoplastic resins, the tanδ was measured in the same manner as mentioned above to obtain a maximum value and a maximum temperature. With respect to a combination of the thermoplastic resin and the damping-property-imparting agent produced in each of Examples and Comparative Examples, a cloud point was measured in the same manner as mentioned above. The results are shown in Table 3.

[Table 3]

| | | Thermoplastic resin | Damping-property-imparting agent | | tanδ | | Cloud point [°C] |
|---|---|---|---|---|---|---|---|
| | | | Type | Amount [parts by mass] | Maximum value | Maximum temperature [°C] | |
| Ex. | 1 | AB-1 | RE-1 | 150 | 5.9 | -24 | < -40 |
| | 2 | AB-1 | RE-1 | 120 | 4.4 | -26 | < -40 |
| | 3 | AB-1 | RE-1 | 100 | 3.5 | -28 | < -40 |
| | 4 | AB-1 | RE-2 | 150 | 5.5 | -27 | < -40 |
| | 5 | AB-1 | RE-3 | 150 | 3.3 | 27 | 142 |
| | 6 | AB-2 | RE-1 | 150 | 5.3 | -23 | < -40 |
| | 7 | AB-2 | RE-1 | 120 | 4.5 | -26 | < -40 |
| | 8 | AB-2 | RE-1 | 100 | 3.3 | -28 | < -40 |
| | 9 | AB-3 | RE-1 | 150 | 4.9 | -23 | < -40 |
| | 10 | AB-1 | RE-1 RE-3 | 125 25 | 4.9 | -20 | < -40 |
| | 11 | AB-1 | RE-1 RE-3 | 100 50 | 4.1 | -12 | < -40 |
| | 12 | AB-1 | RE-1 RE-3 | 75 75 | 3.9 | -3 | < -40 |
| | 13 | ACS-1 | RE-1 | 200 | 3.2 | -28 | < -40 |
| | 14 | ACS-2 | RE-1 | 200 | 3.7 | -27 | < -40 |
| | 15 | SDB-1 | RE-1 | 67 | 3.3 | -24 | -20 |
| | 16 | SDB-2 | RE-1 | 80 | 3.6 | -26 | < -40 |

(continued)

| | | Thermoplastic resin | Damping-property-imparting agent | | tanδ | | Cloud point [°C] |
|---|---|---|---|---|---|---|---|
| | | | Type | Amount [parts by mass] | Maximum value | Maximum temperature [°C] | |
| C. Ex. | 1 | AB-1 | - | - | 1.1 | -32 | - |
| | 2 | PVB-1 | 3G8*1 | 60 | 1.1 | -8 | 67 |
| | 3 | PVB-1 | 3G8*1 BPEF*3 | 60 150 | 4.9 | 25 | difficult to measure*4 |
| | 4 | PVAc-1 | 3G8*1 BPEF*3 | 60 150 | 6.8 | 20 | difficult to measure*4 |
| | 5 | PBA-1 | RE-1 | 150 | unmeasurable*5 | unmeasurable*5 | < -40 |
| | 6 | PVB-1 | 3G8*1 RE-3 | 60 50 | 1.8 | 7 | > 150 |
| | 7 | PVAc-2 | DBA*2 RE-3 | 50 30 | 1.8 | -2 | < 20 |

*1: Triethylene glycol di 2-ethyl hexanoate (not a damping-property-imparting agent)
*2: Dibutyl adipate (not a damping-property-imparting agent)
*3: Bisphenol fluorene ethoxylate (melting point: 161°C)
*4: "difficult to measure" means that 3G8 and BPEF were immiscible with each other and translucent, and therefore the measurement was difficult.
*5: "unmeasurable" means that a sheet form could not be retained at room temperature and therefore the measurement was impossible.

[Production of sound insulation layer]

Each of the resin compositions produced in Examples and Comparative Examples was pressed with a heat press machine at 150°C and 100 kg/ cm$^2$ for 30 minutes to produce a sheet having a thickness of 0.2 mm. The obtained sheet was used as a sound insulation layer in an intermediate film for laminated glasses.

[Production of protective layer]

PVB-2 (100 parts by mass) and 3G8 (36 parts by mass) were melt kneaded with a laboplast mill at 150°C over 5 minutes to produce a resin composition B-1. The resin composition B-1 was pressed with a heat press machine at 150°C and 100 kg/ cm$^2$ for 30 minutes to produce a sheet having a thickness of 0.3 mm. The obtained sheet was used as a protective layer in an intermediate film for laminated glasses.

[Production of intermediate film for laminated glasses and laminated glass]

Each of the sound insulation layers respectively made from the resin compositions produced in Examples and Comparative Examples and each having a thickness of 0.2 mm was sandwiched by two of the protective layers produced in the above-mentioned manner, and the resultant product was pressed at 30°C and 100 kg/ cm$^2$ for 10 minutes to produce a 0.8 mm-thick intermediate film for laminated glasses. The intermediate film for laminated glasses was bonded to two transparent float glasses each having a thickness of 2.0 mm to produce a laminated glass.
Each of the laminated glasses produced in the above-mentioned manner was measured with respect to a sound transmission loss and a haze value in the above-mentioned manner. The handling properties of each of the thermoplastic resins and the resin compositions were also evaluated in the above-mentioned manner. The results are shown in Table 4.

[Table 4]

| | | Handling properties at room temperature | Sound transmission loss | | | Haze | |
|---|---|---|---|---|---|---|---|
| | | | Temperature [°C] | Average value [dB] | 5000Hz | Initial value | Amount of change over time |
| Ex. | 1 | A | 5 | 42.0 | 42.5 | 0.4 | A |
| | 2 | A | 5 | 41.5 | 42.3 | 0.4 | A |
| | 3 | A | 5 | 41.0 | 41.4 | 0.4 | A |
| | 4 | A | 5 | 41.6 | 42.2 | 0.4 | A |
| | 5 | A | 50 | 40.9 | 41.5 | 0.4 | A |
| | 6 | A | 5 | 41.4 | 42.0 | 0.4 | A |
| | 7 | A | 5 | 41.2 | 41.9 | 0.4 | A |
| | 8 | A | 5 | 41.0 | 41.9 | 0.4 | A |
| | 9 | A | 5 | 41.7 | 42.3 | 0.4 | A |
| | 10 | A | 15 | 41.6 | 42.1 | 0.4 | A |
| | 11 | A | 20 | 41.3 | 41.8 | 0.4 | A |
| | 12 | A | 25 | 41.2 | 41.8 | 0.4 | A |
| | 13 | A | 5 | 41.0 | 41.7 | 0.7 | A |
| | 14 | A | 5 | 41.1 | 41.6 | 0.8 | A |
| | 15 | A | 5 | 41.0 | 41.8 | 0.4 | A |
| | 16 | A | 5 | 41.0 | 41.7 | 0.4 | A |
| C. Ex. | 1 | A | 0 | 39.8 | 40.3 | 0.4 | A |
| | 2 | A | 20 | 39.7 | 40.4 | 0.4 | A |
| | 3 | A | 45 | 41.5 | 42.3 | 0.5 | E |
| | 4 | A | 50 | 41.3 | 42.1 | 0.6 | E |
| | 5 | D | 5 | 41.7 | 42.5 | 0.4 | A |
| | 6 | A | 35 | 39.9 | 40.6 | 1.6 | A |
| | 7 | A | 25 | 39.8 | 40.7 | 0.5 | A |

Next, the present invention will be described in more detail with reference to Examples 17 to 32 and Comparative Examples 8 to 14.

[Evaluation methods]

(Tanδ of thermoplastic resin and resin composition)

Tanδ of each of the thermoplastic resins and the resin compositions was evaluated by the same evaluation method as that employed for Examples 1 to 16 and Comparative Examples 1 to 7 mentioned above (see the section "Tanδ of thermoplastic resin and resin composition"), except that each of the thermoplastic resins and the resin compositions was pressed with a heat press machine at 180°C and 100 kg/ cm² for 30 minutes to produce a sheet having a thickness of 0.8 mm.

(Cloud point)

A cloud point was evaluated in the same manner as in the evaluation method employed for Examples 1 to 16 and Comparative Examples 1 to 7 as mentioned above (see "Cloud point").

(Sound transmission loss)

The sound transmission loss of each of films sandwiched by two glasses was evaluated in the same manner as in the evaluation method of ("Sound transmission loss of laminated glass") mentioned above, except that each of the films produced in Examples and Comparative Examples mentioned below was sandwiched by two glasses and the resultant product was cut into a specimen having a size of 25 mm × 300 mm to produce a measurement sample. The results are shown in Table 6.

(Handling properties at room temperature)

A sheet of each of the thermoplastic resins and the resin compositions, which was produced in the same manner as in the method mentioned in the section "Evaluation of tanδ" and had a thickness of 0.8 mm, was cut into a specimen having a length of 10 cm and a width of 1 cm to produce a measurement sample. The sample was maintained at 20°C and 20%RH for 24 hours for humidity conditioning treatment, and was then subjected to a creep test under the conditions of 20°C and 20%RH to determine an elongation rate. The elongation rate thus obtained was evaluated in accordance with the following criteria. The handling properties at room temperature becomes more superior with the increase in the elongation rate, i.e., in the order of A, B, C and D.
Criteria for the evaluation of elongation rate:

A: 0% or more and less than 10%
B: 10% or more and less than 20%
C: 20% or more and less than 50%
D: 50% or more

(Transparency and change in transparency over time of film)

The transparency and the change in transparency over time of each of films sandwiched by two glasses were evaluated in the same manner as mentioned above in the section ("Transparency and change in transparency over time of laminated glass"), except that each of the films produced in the Examples and Comparative Examples mentioned below was sandwiched by two glasses and the resultant product was used as a measurement sample.
In the Examples and Comparative Examples mentioned below, the thermoplastic resins listed in Table 1 shown above and the damping-property-imparting agents listed in Table 2 shown above were used.
In the same manner as in Production Examples 1 to 12 mentioned above, AB-1 to AB-3, ACS-1 to ACS-2, SDB-1 to SDB-2, PVAc-1 to PVAc-2, PVB-1 to PVB-2, and PBA-1 were synthesized respectively.

[Example 17]

The thermoplastic resin AB-1 and the damping-property-imparting agent RE-1 were mixed together in the amounts shown in Table 5 below with a laboplast mill at 120°C for 5 minutes to produce a damping resin composition 1. In Table 5, the amount (parts by mass) of a damping-property-imparting agent represents the amount of the damping-property-imparting agent based on 100 parts by mass of a thermoplastic resin. The maximum value of tanδ (TDP-1) of the thermoplastic resin AB-1 which appeared at -31.7°C was 1.1, while the maximum value of tanδ (TDP-2) of a mixture composed of 100 parts by mass of the thermoplastic resin AB-1 and 25 parts by mass of RE-1, which corresponds to the aforementioned maximum value and appears at -30.5°C, was 1.5. It was confirmed that RE-1 was a damping-property-imparting agent in the resin composition containing the thermoplastic resin AB-1.

[Comparative Example 8]

No damping-property-imparting agent was added, and a thermoplastic resin was used without any modification.

[Examples 18 to 32 and Comparative Examples 9 to 14]

The same procedure as in Example 17 was carried out, except that the types of the thermoplastic resin and the damping-property-imparting agent and the amount of the damping-property-imparting agent based on 100 parts by mass of the thermoplastic resin were changed to those shown in Table 5. In this manner, resin compositions were produced. Comparison was made between a maximum value of tanδ (TDP-1) of each of thermoplastic resins used in Examples 18 to 32 and Comparative Examples 9 to 14 which appeared in a temperature range from -100 to 250°C and a maximum value of tanδ (TDP-2) of a mixture containing 100 parts by mass of each of the thermoplastic resins and 25 parts by mass of each compounds listed in the column "damping-property-imparting agent" in Table 5 which corresponds to the aforementioned maximum value. As a result, it was found that the relationship represented by the formula: TDP-1 < TDP-2 was satisfied when the compounds listed in Table 2 were used, and therefore it was confirmed that all of the compounds listed in Table 2 were damping-property-imparting agents in resin compositions each containing the thermoplastic resins listed in Table 5. With respect to 3G8 and DBA shown in Table 5, it was confirmed that the relationship represented by the formula: TDP-1 < TDP-2 was not satisfied and therefore these substances were not damping-property-imparting agents.

With respect to each of the obtained resin compositions and the thermoplastic resins, the tan$\delta$ was measured in the same manner as mentioned above to obtain a maximum value and a maximum temperature. With respect to a combination of the thermoplastic resin and the damping-property-imparting agent in each of Examples and Comparative Examples, a cloud point was measured in the same manner as mentioned above. The results are shown in Table 5.

[Table 5]

| | | Thermoplastic resin | Damping-property-imparting agent | | tan$\delta$ | | Cloud point [°C] |
|---|---|---|---|---|---|---|---|
| | | | Type | Amount [parts by mass] | Maximum value | Maximum temperature [°C] | |
| Ex. | 17 | AB-1 | RE-1 | 150 | 5.9 | -24 | < -40 |
| | 18 | AB-1 | RE-1 | 120 | 4.4 | -26 | < -40 |
| | 19 | AB-1 | RE-1 | 100 | 3.5 | -28 | < -40 |
| | 20 | AB-1 | RE-2 | 150 | 5.5 | -27 | < -40 |
| | 21 | AB-1 | RE-3 | 150 | 3.3 | 27 | 142 |
| | 22 | AB-2 | RE-1 | 150 | 5.3 | -23 | < -40 |
| | 23 | AB-2 | RE-1 | 120 | 4.5 | -26 | < -40 |
| | 24 | AB-2 | RE-1 | 100 | 3.3 | -28 | < -40 |
| | 25 | AB-3 | RE-1 | 150 | 4.9 | -23 | < -40 |
| | 26 | AB-1 | RE-1 RE-3 | 125 25 | 4.9 | -20 | < -40 |
| | 27 | AB-1 | RE-1 RE-3 | 100 50 | 4.1 | -12 | < -40 |
| | 28 | AB-1 | RE-1 RE-3 | 75 75 | 3.9 | -3 | < -40 |
| | 29 | ACS-1 | RE-1 | 200 | 3.2 | -28 | < -40 |
| | 30 | ACS-2 | RE-1 | 200 | 3.7 | -27 | < -40 |
| | 31 | SDB-1 | RE-1 | 67 | 3.3 | -24 | -20 |
| | 32 | SDB-2 | RE-1 | 80 | 3.6 | -26 | < -40 |

(continued)

| | | Thermoplastic resin | Damping-property-imparting agent | | tanδ | | Cloud point [°C] |
| --- | --- | --- | --- | --- | --- | --- | --- |
| | | | Type | Amount [parts by mass] | Maximum value | Maximum temperature [°C] | |
| C.Ex. | 8 | AB-1 | - | - | 1.1 | -32 | - |
| | 9 | PVB-1 | 3G8[*1] | 60 | 1.1 | -8 | 67 |
| | 10 | PVB-1 | 3G8[*1] BPEF[*3] | 60 150 | 4.9 | 25 | difficult to measure[*4] |
| | 11 | PVAc-1 | 3G8[*1] BPEF[*3] | 60 150 | 6.8 | 20 | difficult to measure[*4] |
| | 12 | PBA-1 | RE-1 | 150 | unmeasurable[*5] | unmeasurable[*5] | < -40 |
| | 13 | PVB-2 | 3G8[*1] RE-3 | 60 50 | 1.8 | 7 | > 150 |
| | 14 | PVAc-2 | DBA[*2] RE-3 | 50 30 | 1.8 | -2 | < 20 |

*1: Triethylene glycol di 2-ethyl hexanoate (not a damping-property-imparting agent)
*2: Dibutyl adipate (not a damping-property-imparting agent)
*3: Bisphenol fluorene ethoxylate (melting point: 161°C)
*4: "difficult to measure" means that 3G8 and BPEF were immiscible with each other and translucent, and therefore the measurement was difficult.
*5: "unmeasurable" means that a sheet form could not be retained at room temperature and therefore the measurement was impossible.

[Production of damping sheet]

Each of the resin compositions and the thermoplastic resins produced in Examples and Comparative Examples was pressed with a heat press machine at 180°C for 100 kg/ cm$^2$ for 30 minutes to produce a damping sheet having a thickness of 0.2 mm.

[Production of damping laminate]

PVB-2 (100 parts by mass) and 3G8 (36 parts by mass) were melt kneaded with a laboplast mill at 150°C for 5 minutes to produce a resin composition B-1. The resin composition B-1 was pressed with a heat press machine at 180°C and 100 kg/ cm$^2$ for 30 minutes to produce a sheet B having a thickness of 0.3 mm. Two of the sheets B thus produced were used, and the damping sheet produced above was sandwiched by the sheets B, and then the resultant product was pressed at 30°C and 100 kg/ cm$^2$ for 10 minutes to produce a damping laminate. The obtained laminate can be used as, for example, an intermediate film for laminated glasses. The laminate was bonded to two transparent glass plates, and the resultant product was used for the measurement of a sound transmission loss and a haze value. The handling properties of the damping resin composition were evaluated by the above-mentioned method. The results are shown in Table 6.

[Table 6]

| | | Handling properties at room temperature | Sound transmission loss | | | Haze | |
| --- | --- | --- | --- | --- | --- | --- | --- |
| | | | Temperature [°C] | Average value [dB] | 5000Hz | Initial value | Amount of change over time |
| | 17 | A | 5 | 42.0 | 42.5 | 0.4 | A |
| | 18 | A | 5 | 41.5 | 42.3 | 0.4 | A |

(continued)

| | | Handling properties at room temperature | Sound transmission loss | | | Haze | |
|---|---|---|---|---|---|---|---|
| | | | Temperature [°C] | Average value [dB] | 5000Hz | Initial value | Amount of change over time |
| Ex. | 19 | A | 5 | 41.0 | 41.4 | 0.4 | A |
| | 20 | A | 5 | 41.6 | 42.2 | 0.4 | A |
| | 21 | A | 50 | 40.9 | 41.5 | 0.4 | A |
| | 22 | A | 5 | 41.4 | 42.0 | 0.4 | A |
| | 23 | A | 5 | 41.2 | 41.9 | 0.4 | A |
| | 24 | A | 5 | 41.0 | 41.9 | 0.4 | A |
| | 25 | A | 5 | 41.7 | 42.3 | 0.4 | A |
| | 26 | A | 15 | 41.6 | 42.1 | 0.4 | A |
| | 27 | A | 20 | 41.3 | 41.8 | 0.4 | A |
| | 28 | A | 25 | 41.2 | 41.8 | 0.4 | A |
| | 29 | A | 5 | 41.0 | 41.7 | 0.7 | A |
| | 30 | A | 5 | 41.1 | 41.6 | 0.8 | A |
| | 31 | A | 5 | 41.0 | 41.8 | 0.4 | A |
| | 32 | A | 5 | 41.0 | 41.7 | 0.4 | A |
| C. Ex. | 8 | A | 0 | 39.8 | 40.3 | 0.4 | A |
| | 9 | A | 20 | 39.7 | 40.4 | 0.4 | A |
| | 10 | A | 45 | 41.5 | 42.3 | 0.5 | E |
| | 11 | A | 50 | 41.3 | 42.1 | 0.6 | E |
| | 12 | D | 5 | 41.7 | 42.5 | 0.4 | A |
| | 13 | A | 35 | 39.9 | 40.6 | 1.6 | A |
| | 14 | A | 25 | 39.8 | 40.7 | 0.5 | A |

**Claims**

1. An intermediate film for laminated glasses, the intermediate film having at least a sound insulation layer that comprises a resin composition A containing 100 parts by mass of a thermoplastic resin and 10 to 1000 parts by mass of a damping-property-imparting agent, wherein
   the damping-property-imparting agent has a molecular weight of 100 to 10000 and does not have a melting point at a temperature higher than 30°C, and
   the resin composition A has a maximum value of tanδ at a temperature of 30°C or lower, and the maximum value is more than 3.1.

2. The intermediate film for laminated glasses according to claim 1, wherein the thermoplastic resin has two or more tanδ peak temperatures in a temperature range from -100 to 250°C.

3. An intermediate film for laminated glasses, the intermediate film having at least a sound insulation layer that comprises a resin composition A containing 100 parts by mass of a thermoplastic resin and 10 to 1000 parts by mass of a damping-property-imparting agent, wherein
   the damping-property-imparting agent has a molecular weight of 100 to 10000,
   the thermoplastic resin has two or more tanδ peak temperatures in a temperature range from -100 to 250°C,
   the resin composition A has a maximum value of tanδ at a temperature of 30°C or lower, and

the maximum value is more than 3.1.

4. The intermediate film for laminated glasses according to any one of claims 1 to 3, wherein the cloud point of a composition consisting of 100 parts by mass of the damping-property-imparting agent and 8 parts by mass of the thermoplastic resin is lower than 150°C.

5. The intermediate film for laminated glasses according to any one of claims 1 to 4, wherein the thermoplastic resin is an acrylic resin.

6. The intermediate film for laminated glasses according to claim 5, wherein the acrylic resin is an acrylic block copolymer or an acrylic core-shell resin.

7. The intermediate film for laminated glasses according to claim 6, wherein the acrylic resin contains a soft segment in an amount of 30% by mass or more based on the whole amount of the acrylic resin.

8. The intermediate film for laminated glasses according to any one of claims 1 to 4, wherein the thermoplastic resin is a styrene-based block copolymer.

9. The intermediate film for laminated glasses according to any one of claims 1 to 8, wherein the damping-property-imparting agent is a compound having two or more cyclic skeletons.

10. The intermediate film for laminated glasses according to any one of claims 1 to 9, wherein the damping-property-imparting agent is rosin or modified rosin.

11. The intermediate film for laminated glasses according to claim 10, wherein the modified rosin is a rosin ester.

12. The intermediate film for laminated glasses according to claim 11, wherein the rosin ester is an ester compound of at least one compound selected from the group consisting of rosin acid, hydrogenated rosin and disproportionated rosin with an alcohol having a valency of 1 to 4.

13. The intermediate film for laminated glasses according to claim 11 or 12, wherein the rosin ester has a $T_g$ of lower than 50°C.

14. The intermediate film for laminated glasses according to any one of claims 1 to 13, comprising at least the sound insulation layer and a protective layer laminated on at least one surface of the sound insulation layer.

15. A damping resin composition comprising 100 parts by mass of a thermoplastic resin and 10 to 1000 parts by mass of a damping-property-imparting agent, wherein
the damping-property-imparting agent has a molecular weight of 100 to 10000 and does not have a melting point at a temperature higher than 30°C,
the resin composition has a maximum value of tanδ at a temperature of 30°C or lower, and
the maximum value is more than 3.1.

16. A damping resin composition comprising 100 parts by mass of a thermoplastic resin and 10 to 1000 parts by mass of a damping-property-imparting agent, wherein
the damping-property-imparting agent has a molecular weight of 100 to 10000,
the thermoplastic resin has two or more tanδ peak temperatures in a temperature range from -100 to 250°C,
the resin composition has a maximum value of tanδ at a temperature of 100°C or lower, and
the maximum value is more than 3.1.

## INTERNATIONAL SEARCH REPORT

| | International application No. |
|---|---|
| | PCT/JP2017/033699 |

A. CLASSIFICATION OF SUBJECT MATTER
C03C27/12(2006.01)i, B60J1/00(2006.01)i, C08F265/06(2006.01)i,
C08F297/02(2006.01)i, C08L33/00(2006.01)i, C08L53/00(2006.01)i,
C08L93/04(2006.01)i, C08L101/00(2006.01)i
According to International Patent Classification (IPC) or to both national classification and IPC

B. FIELDS SEARCHED

Minimum documentation searched (classification system followed by classification symbols)
C03C27/12, B60J1/00, F16F15/08, C08F265/06, C08F297/02, C08L33/00, C08L53/00,
C08L93/04, C08L101/00

Documentation searched other than minimum documentation to the extent that such documents are included in the fields searched
Published examined utility model applications of Japan       1922-1996
Published unexamined utility model applications of Japan     1971-2017
Registered utility model specifications of Japan             1996-2017
Published registered utility model applications of Japan     1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-045089 A (INOAC CORPORATION) 28 February 2008, | 15-16 |
| Y | claims, paragraphs [0001], [0007], [0012]-[0013], [0015], [0018], [0020]-[0021], [0024], table 1 (Family: none) | 1-14 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 521 260 A1**

**INTERNATIONAL SEARCH REPORT**

International application No.

PCT/JP2017/033699

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2000-044818 A (TOKAI RUBBER INDUSTRIES, LTD.) 15 February 2000, claims, paragraphs [0001], [0011], | 15-16 |
| Y | [0018]-[0028], [0032], [0036]- 0061], [0063]-[0072], [0074]-[0076], [0078]-[0085], [0087]-[0090], [0092]-[0096], [0099]-[0113], [0115]-[0122], tables 1-11 & US 6265475 B1 column 1, lines 3-8, column 1, lines 48-53, column 3, line 54 to column 19, line 51, tables 1-7 | 1-14 |
| X | JP 10-298354 A (TOKAI RUBBER INDUSTRIES, LTD.) 10 November 1998, paragraphs [0001], [0004], | 15-16 |
| Y | [0011]-[0012], [0021], [0023]-[0024], [0026]-[0027], [0031], tables 1-2, fig. 2 (Family: none) | 1-14 |
| X | JP 04-089849 A (JAPAN SYNTHETIC RUBBER CO., LTD.) 24 March 1992, claims, page 1, left column, line 15 to | 15-16 |
| Y | page 1, right column, line 4, page 2, upper left column, line 10 to page 2 upper right column, line 13, page 2, lower left column, line 17 to page 2, lower right column, line 9, page 3, upper left column, lines 9-20, table 1 (Family: none) | 1-14 |
| Y | JP 2016-056296 A (KURARAY CO., LTD.) 21 April 2016, paragraphs [0001], [0007]-[0072], [0080]-[0081], [0101]-[0108], [0112]-[0114], [0118]-[0119], tables 1-3 (Family: none) | 1-14 |
| A | JP 2004-143340 A (KANEKA CORP.) 20 May 2004, claims, paragraphs [0001], [0011]-[0084], [0128], [0134]-[0138], [0141]-[0143], table 1 (Family: none) | 1-16 |
| A | JP 2002-275321 A (DU PONT-MITSUI POLYCHEMICALS CO., LTD) 25 September 2002, claims, paragraphs [0001], [0008]-[0009], [0014]-[0022], [0025], [0027]-[0029], tables 1-3 (Family: none) | 1-16 |
| A | 石井正雄, スチレン系熱可塑性エラストマーの特性と応用, Nippon Gomu Kyokaishi, December 1997, Vol. 70, Issue 12, pp. 707-714, DOI:10.2324/gomu.70.707, non-official translation (ISHII, Masao, Characteristics and Applications of Styrene Thermoplastic Elastomers) | 1-16 |

Form PCT/ISA/210 (continuation of second sheet) (January 2015)

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014188544 A1

- WO 2013042771 A1

**Non-patent literature cited in the description**

- Handbook of Damping Technology. Publishing Co., Ltd, 2008, 490